# EUROPÄISCHE PATENTSCHRIFT

(11) **EP 3 915 763 B1**
(45) Veröffentlichungstag und Bekanntmachung des Hinweises auf die Patenterteilung: **17.04.2024**
(21) Anmeldenummer: 20176376.0
(22) Anmeldetag: 25.05.2020
(51) Int. Cl.: B29C 64/10, F16B 33/00, F16B 43/00, B33Y 80/00, F16B 37/12, B29C 70/68, B33Y 40/00, B33Y 10/00, B29C 64/40, B33Y 70/00

(54) **3D-DRUCK-BAUTEIL SOWIE EIN HERSTELLUNGSVERFAHREN DAFÜR**
3D PRINT COMPONENT AND MANUFACTURING METHOD FOR SAME
COMPOSANT IMPRIMÉ EN 3D AINSI QUE PROCÉDÉ DE FABRICATION ASSOCIÉ

(43) Veröffentlichungstag der Anmeldung: 01.12.2021
(73) Patentinhaber: Böllhoff Verbindungstechnik GmbH, 33649 Bielefeld (DE)
(72) Erfinder: STUMPF, Michael, 33611 Bielefeld (DE); REKER, Stefan, 49163 Bohmte (DE); KIRCHHECKER, Uwe, 33803 Steinhagen (DE)
(74) Vertreter: HWP Intellectual Property

(56) Entgegenhaltungen:
- US-A1- 2008 006 966
- US-A1- 2009 174 709
- US-A1- 2015 099 087

## Beschreibung

### 1. Gebiet der Erfindung

Die vorliegende Erfindung betrifft ein 3D-Druck-Bauteil aus Kunststoff oder Metall, welches mithilfe eines bekannten 3D-Druck-Verfahrens hergestellt ist und eine in seinem Inneren angeordnete Verbindungskomponente aufweist. Zudem betrifft vorliegende Erfindung ein Herstellungsverfahren für das 3D-Druck-Bauteil mithilfe eines bekannten 3D-Druck-Verfahrens.

### 2. Hintergrund der Erfindung

Im Stand der Technik sind verschiedene additive Herstellungsverfahren bekannt, die auch als 3D-Druck-Verfahren bezeichnet werden. Die Bezeichnung additive Verfahren hat ihren Ursprung darin, das Material bei der Herstellung eines Bauteils ergänzend, also additiv, dazugegeben und während des Herstellungsverfahrens zu einer Bauteilstruktur verfestigt wird. Entsprechend wird durch einen Schichtaufbau Material Schicht für Schicht aufgetragen und je nach dem gewählten 3D-Druck-Verfahren werden diese Schichten miteinander zu einem Bauteil verfestigt und verbunden.

Die für diese 3D-Druck-Verfahren geeigneten Materialien umfassen Kunststoffe, Metalle häufig in Kombination mit Füllstoffen und Polymergips.

Zu den gängigsten 3D-Druck-Verfahren, die auch unter dem Begriff Rapid Prototyping-Verfahren bekannt sind, zählen: Mulit Jet Fusion (MJF), selektives Lasersintern (SLS), Stereolithographie (SLA), Polygrafie, Fused Deposition Modeling (FDM) oder Fused Filament Fabrication (FFF), also Schmelzschichtung, selektives Lasermelting (SLM) sowie 3D Printing (3DP). Die Voraussetzungen für die oben genannten 3D-Druck-Verfahren sind druckbare 3D-Daten, die beispielsweise mittels CAD-Konstruktion, 3D-Modeling oder mittels 3D-Scannen erzeugt werden.

DE 10 2017 124 124 A1 beschreibt das Herstellen von Bauteilen mittels 3D-Druck. Als 3D-Druckverfahren wird beispielsweise das bekannte Lasersintern zur Verarbeitung von Kunststoffpulver oder zur Verarbeitung von Metallpulver verwendet.

Es ist häufig wünschenswert, in einem Bauteilkörper einen Einsatzkörper zu integrieren. Dieser stammt beispielsweise aus einem spannenden oder Urformverfahren und lässt sich nicht im 3D-Druck herstellen. Zur Integration des Einsatzkörpers wird ein erster Teil des Bauteilkörpers im 3D-Druck mit Aufnahmeräumen erzeugt. In diesem Aufnahmeraum wird dann der Einsatzkörper angeordnet. Die Form und Anordnung des Einsatzkörpers erzeugt eine durchgehende Außenwand des Bauteilkörpers, die dann für den weiteren Aufbau des Bauteilkörpers mit dem 3D-Druckverfahren überdruckt wird.

Dieser Herstellungsweg des Bauteils hat trotz seiner Effektivität den Nachteil, dass Einsatzkörper mit einer Öffnung zur Außenwand des Bauteilkörpers nicht überdruckt werden können. Denn das zu verfestigende pulverförmige Material hält nicht im Bereich einer Öffnung des Einsatzkörpers.

Sollte der Bauteilkörper oder ein darin angeordneter Einsatzkörper eine Öffnung aufweisen, schlägt US 2006/0003095 A1 ein domartiges Überdrucken vor. Zu diesem Zweck wird am Rand einer Öffnung Material angedruckt. Das angedruckte Material bildet eine geneigte Wand, die einen Teil der Öffnung abdeckt. Durch gezielte Neigung des Bauteils ist es zudem möglich, die Reichweite der geneigten Wand über der Öffnung und somit deren Abdeckung der Öffnung zu erhöhen. Dennoch hat diese Technik den Nachteil, dass die geneigte abzudeckende Wand eine zusätzliche Aufbauhöhe verlangt. Diese erhöht den Platzbedarf des Bauteils oberhalb der Öffnung, ohne dass das zusätzliche Bauteilvolumen funktionell zum Bauteil beiträgt.

EP 3 323 532 A1 schlägt in diesem Zusammenhang vor, vorhandene Öffnungen mithilfe eines Deckels zu schließen und nachfolgend zu überdrucken. Ein derartiger Deckel ist in seiner Form an eine vorhandene Bauteilöffnung angepasst. Zudem ist es denkbar, den Deckel aus unterschiedlichen Materialien herzustellen, solange sie kompatibel zum Material des 3D-Bauteils sind.

Schließlich ist ein Verfahren zum Herstellen von 3D-Bauteilen, die eingebettete Einsätze aufweisen, in US 2009/174709 A1 beschrieben. Das Verfahren zum Generieren von Bausequenzdaten für ein computergestütztes Entwurfsmodell eines dreidimensionalen Objekts umfasst das Identifizieren einer Position einer Einsatz-Datendarstellung in dem computergestützten Entwurfsmodell, das Aufteilen des computergestützten Entwurfsmodells in eine Vielzahl von geschnittenen Schichten, das Erzeugen mehrerer Stützschichten für mindestens einen Teil der mehreren geschnittenen Schichten und das Erzeugen eines ungefüllten Bereichs in dem computergestützten Entwurfsmodell an der identifizierten Stelle der Einsatz-Datendarstellung.

Der Deckel wird somit als Stützstruktur eingesetzt, um eine über der Öffnung aufzubringende 3D-Druckschicht zu ermöglichen und abzustützen. Eine über die Abstützung hinausgehende Aufgabe wird durch den Deckel nicht realisiert.

Es ist somit die Aufgabe vorliegender Erfindung, ein 3D-Druck-Bauteil und ein entsprechendes Herstellungsverfahren vorzuschlagen, welches bekannte Konstruktionskonzepte in ihrer Funktionalität weiterentwickelt.

### 3. Zusammenfassung der Erfindung

Die obige Aufgabe wird gelöst durch ein 3D-Druck-Bauteil aus Kunststoff oder Metall gemäß dem unabhängigen Patenanspruch 1 sowie durch ein Herstellungsverfahren eines 3D-Druck-Bauteils gemäß dem unabhängigen Patentanspruch 8. Vorteilhafte Ausführungsformen und Weiterentwicklungen ergeben sich aus der nachfolgenden Beschreibung, den Zeichnungen sowie den anhängenden Patentansprüchen.

Vorliegende Erfindung umfasst ein 3D-Druck-Bauteil aus Kunststoff oder Metall, welches mit Hilfe von Schmelzschichtung, wie Fused Deposition Modeling (FDM) oder Fused Filament Fabrication (FFF), oder ARBURG Kunststoff-Freiformen (AKF) als ein bekanntes 3D-Druck-Verfahren hergestellt ist. Das 3D-Druck-Bauteil weist die folgenden Merkmale auf: a. einen Bauteilkörper mit einem Aufnahmeraum, der durch eine umgebende Begrenzungswand eingeschlossen ist und in welchem eine Verbindungskomponente, insbesondere ein Gewindeeinsatz oder eine Gewindebuchse oder nicht erfindungsgemäß ein Gewindebolzen oder ein Funktionsbolzen, fest angeordnet ist, wobei die Verbindungskomponente durch mindestens eine Öffnung der Begrenzungswand mit einem Verbindungselement außerhalb des 3D-Druck-Bauteils verbindbar ist, b. der Aufnahmeraum weist eine 3D-gedruckte Innenkontur auf, die nicht rotationssymmetrisch zumindest teilweise angepasst an eine angrenzenden Seite der Verbindungskomponente ausgebildet ist, so dass die Verbindungskomponente formschlüssig im Aufnahmeraum gehalten ist, und c. die Begrenzungswand des Aufnahmeraums besteht zumindest an einer Seite aus einem separaten Wandelement, welches den Aufnahmeraum direkt begrenzt, mittels 3D-Druck überdruckt und in die Begrenzungswand integriert ist. Das Wandelement ist innerhalb des Aufnahmeraums auf die Verbindungskomponente aufgesetzt, um eine vorhandene Öffnung in der Verbindungskomponente durch das Überdrucken mittels 3D-Druck nicht zu blockieren oder zu beschädigen.

In der Konstruktion von Bauteilen wird zunehmend versucht, klassische Herstellungsverfahren, wie beispielsweise spannende Verfahren, Gussverfahren oder Biegeverfahren, zumindest teilweise oder vollständig durch etablierte 3D-Druck-Verfahren zu ersetzen. Bereits im Prototypenbau haben derartige Verfahren Einzug gehalten. Mittlerweile ist die Technologie der verschiedenen bekannten 3D-Druck-Verfahren so weit entwickelt worden, dass mittels 3D-Druck auch Serien von Bauteilen hergestellt werden können.

Die damit hergestellten Bauteile aus Kunststoff oder Metall erfordern meist weniger Material zu ihrer Herstellung, da sie in ihrem Inneren durch teils filigrane Stützstrukturen anstelle von Vollmaterial ausgefüllt sind. Dies spart zwar Bauteilmaterial, verringert aber häufig die mechanische Belastbarkeit der hergestellten Bauteile. Um diese Nachteile zu überwinden, beispielsweise eine belastbare Verbindung mit einem im 3D-Druck hergestellten Bauteil herstellen zu können, offenbart vorliegende Erfindung eine mechanisch belastbare Integration einer Verbindungskomponente in das 3D-Druck-Bauteil. Diese Verbindungskomponente, wie beispielsweise eine Gewindebuchsen, ein Gewindeeinsatz, eine weibliche Verbindungskomponente zum Herstellen einer Bajonettverbindung und ähnliche bekannte Konstruktionen, ist formschlüssig und/oder reibschlüssig in dem Aufnahmeraum des 3D-Druck-Bauteils aufgenommen, sodass eine möglichst große Grenzfläche zwischen der Innenwand des Aufnahmeraums und der Außenseite der Verbindungskomponente zu dem bevorzugten Formschluss oder allgemein zur Verbindung beiträgt. Durch die bevorzugte Nutzung einer möglichst großen Grenzfläche zwischen der Innenwand des Aufnahmeraums und der Außenseite der Verbindungskomponente werden mögliche mechanische Belastung von der Verbindungskomponente auf große Teile des 3D-Druck-Bauteils und im Speziellen auf die Innenwand des Aufnahmeraums übertragen. Zudem ist die Verbindungskomponente im Aufnahmeraum stabil, vorzugsweise fest und beispielsweise drehfest, angeordnet.

Um das Volumen des 3D-Druck-Bauteils effektiv zu gestalten, d. h. seine Größe trotz der Aufnahme einer Verbindungskomponente in dem Aufnahmeraum möglichst klein zu halten, wird der Aufnahmeraum mit der eingesetzten Verbindungskomponente durch ein Wandelement begrenzt, welches nachfolgend mithilfe des genutzten 3D-Druck-Verfahrens bedruckt wird. Das Wandelement bildet somit einerseits eine Stützstruktur, um ein platzsparendes Überdrucken des gefüllten Aufnahmeraums durchführen zu können. Zudem stellt das Wandelement aber auch eine Füll- und Stützkomponente innerhalb des Aufnahmeraums dar. Denn das Wandelement wird vorzugsweise direkt angrenzend an die im Aufnahmeraum angeordnete Verbindungskomponente positioniert, um ein im Aufnahmeraum vorhandenes Leervolumen zu füllen. Das hat zur Folge, dass dieses leere Volumen nicht mithilfe des 3D-Druck-Verfahrens aufgefüllt werden muss, weiß beispielsweise eine verringerte Stabilität des 3D-Druck-Bauteils zur Folge haben könnte. Zudem ist es denkbar, dass die im Aufnahmeraum angeordnete Verbindungskomponente eine Öffnung zum Aufnehmen eines Verbindungselements aufweist, welche nur mit ineffektivem Aufwand überdruckt werden könnte. Somit führt das Einsetzen des Wandelements in den Aufnahmeraum zu einer direkten Begrenzung des Aufnahmeraums zum Schließen von vorhandenem Leervolumen, damit zu einer Ergänzung der Begrenzungswand des Bauteils und gleichzeitig zum Bereitstellen einer mittels 3D-Druck überdruckbaren Stützstruktur zur Erzeugung einer passenden Außenwand des 3D-Druck-Bauteils.

Gemäß einer bevorzugten Ausführungsform des 3D-Druck-Bauteils die Verbindungskomponente einen Teilbereich auf, der in eine Öffnung oder in eine dem Aufnahmeraum zugewandte Vertiefung des Wandelements ragt, so dass die Verbindungskomponente, vorzugsweise fest, mit dem Wandelement verbunden ist.

Gemäß einer weiteren bevorzugten Ausgestaltung des 3D-Druck-Bauteils weist der Teilbereich der Verbindungskomponente und das Wandelement zumindest gemäß einer der Alternativen formschlüssig, reibschlüssig und stoffschlüssig miteinander verbunden.

Wie oben bereits beschrieben worden ist, ist die Verbindungskomponente formschlüssig im Aufnahmeraum aufgenommen. Zu diesem Zweck weist die Verbindungskomponente vorzugsweise eine unrunde Außenkontur auf, wie es beispielsweise bei bekannten Gewindeeinsätzen für Warmeinbettverfahren der Fall ist. Zudem ist es genauso denkbar, bekannte Gewindehülsen, Bajonettverbinder oder weibliche Rastkomponenten mit einer unrunden Außenkontur zu versehen, sodass diese formschlüssig in einem in seiner Form angepasst an die Verbindungskomponente gestalteten Aufnahmeraum aufnehmbar sind.

Diese formschlüssige Verbindung zwischen der Innenkontur bzw. der Innenwand des Aufnahmeraums und der darin aufgenommenen Verbindungskomponente wird vorzugsweise zusätzlich durch eine formschlüssige Verbindung zwischen dem Wandelement und der Verbindungskomponente unterstützt. Denn das Wandelement ist bereits durch das Überdrucken mithilfe des 3D-Druckverfahrens fest mit dem Bauteil verbunden.

Diese Verbindung lässt sich zusätzlich zur Stabilisierung der in dem Aufnahmeraum aufgenommenen Verbindungskomponente nutzen. Zu diesem Zweck greift die Verbindungskomponente mit einem Teilbereich in eine dafür vorgesehene Öffnung und/oder Vertiefung des Wandelements ein, um eine vorzugsweise feste Verbindung zwischen dem Wandelement und der Verbindungskomponente herzustellen. Diese Verbindung zwischen Verbindungskomponente und Wandelement ist gemäß unterschiedlicher bevorzugter Ausgestaltungen nach mindestens einer der folgenden Möglichkeiten stoffschlüssig, reibschlüssig, formschlüssige ausgebildet. Somit realisiert das oben beschriebene Wandelement neben der Funktion der Stützstruktur zur Außenseite des 3D-Druck-Bauteils und dem nach innen gerichteten Auffüllen des Freivolumens des Aufnahmeraums auch noch eine Stabilisierung und Verstärkung der Anordnung der Verbindungskomponente in dem Aufnahmeraum gegen mechanische Belastungen. Derartige mechanische Belastungen können beispielsweise auftreten, wenn die Verbindungskomponente einen bewegbaren Gewindeeinsatz darstellt, in welchem ein Gewindebolzen eingeschraubt wird.

Es ist zudem erfindungsgemäß bevorzugt, dass das Wandelement des 3D-Druck-Bauteils in einer unrunden Wandöffnung der Begrenzungswand angeordnet und das Wandelement in einer Umfangsgestalt an die unrunde Wandöffnung angepasst ist, so dass ein Drehen des Wandelements in der Wandöffnung eingeschränkt oder verhindert ist.

Gemäß einer weiteren bevorzugten Ausgestaltung zur stabilisierenden Integration der Verbindungskomponente in den Aufnahmeraum und das 3D-Druck-Bauteil weist das Wandelement eine unrunde Außenkontur auf. Dieses unrunde Wandelement ist zudem in eine unrunde Wandöffnung der Begrenzungswand und/oder in ein unrundes Freivolumen des Aufnahmeraums eingesetzt, wodurch eine formschlüssige Verbindung zwischen dem Wandelement und dem das Wandelement begrenzenden Bereich des 3D-Druck-Bauteils erzeugt wird. Mithilfe dieser bevorzugten geometrischen Anpassung zwischen der äußeren Gestalt des Wandelements und der äußeren Gestalt des 3D-Druck-Bauteils werden ebenfalls mechanische Belastungen auf die Verbindungskomponente im Innern des Aufnahmeraums auf die Grenzfläche zwischen dem Wandelement und dem 3D-Druck-Bauteil übertragen. Somit trägt auch die gezielte Formgebung und Anordnung des Wandelements innerhalb des 3D-Druck-Bauteils dazu bei, mechanische Belastungen der Verbindungskomponente auch auf entfernte Bereiche des 3D-Druck-Bauteils zu übertragen, welche nicht unmittelbar benachbart zur Verbindungskomponente angeordnet sind. Diese Konstruktionsweise hat den Vorteil, dass selbst bei einer weniger belastbaren Stützstruktur eines 3D-Druck-Bauteils im Vergleich zu einem Bauteil aus Vollmaterial ausreichend lastabtragenden bzw. lastaufnehmende Bereiche bereitgestellt werden, sodass die funktionelle Benutzung der Verbindungskomponente zum Herstellen einer Verbindung zu einem äußeren Verbindungselement in gleicher Weise umsetzbar ist wie bei der Anwendung einer derartigen Verbindungskomponente in einem Bauteil aus Vollmaterial.

Gemäß einer weiteren bevorzugten Ausführungsform des 3D-Druck-Bauteils sind die Verbindungskomponente, insbesondere ein Gewindeeinsatz, formschlüssig an der Begrenzungswand und in dem Wandelement und das Wandelement formschlüssig in der Wandöffnung gehalten.

Um die mechanische Stabilität der Verbindungskomponente innerhalb des 3D-Druck-Bauteils weiter zu verbessern und auf diese Weise auch die Haltbarkeit und Belastbarkeit des gesamten 3D-Druck-Bauteils zu steigern, ist vorzugsweise die Verbindungskomponente zusätzlich formschlüssig mit der inneren Begrenzungswand des Aufnahmeraums verbunden. Dieser Formschluss wird unterstützt durch eine zudem formschlüssige Verbindung zwischen dem Wandelement und der in dem Aufnahmeraum aufgenommenen Verbindungskomponente. Dieser bevorzugte doppelte Formschluss der Verbindungskomponente, d. h. Formschluss zur inneren Begrenzungswand und Formschluss zum Wandelement, wird des weiteren formschlüssig ergänzt durch eine Aufnahme und Befestigung des Wandelements in einer an die äußere Form des Wandelements angepasste Wandöffnung des 3D-Druck-Bauteils. Daraus folgt, dass erfindungsgemäß bevorzugt eine Kombination von mehreren formschlüssigen Verbindungen in unterschiedlichen Bereichen des 3D-Druck-Bauteils verwendet werden, um die im Aufnahmeraum angeordnete Verbindungskomponente belastbar und verlässlich innerhalb des 3D-Druck-Bauteils zu halten.

Während das bevorzugte Wandelement oben als ein Element zum Füllen des Aufnahmeraums und zum äußeren Begrenzen des Aufnahmeraums beschrieben ist, ist es ebenfalls bevorzugt, zumindest ein weiteres Wandelement als Stabilisierungs- und/oder Stützhilfe innerhalb des Aufnahmeraums anzuordnen. Stabilisieren und stützen insofern, dass dieses zusätzliche bevorzugte Wandelement nicht dazu dient, eine durch überdrucken erzeugte Begrenzungswand des 3D-Druck-Bauteils zu erzeugen. Vielmehr dient das Wandelement, welches vorzugsweise aus einem ausreichend stabilen Material, d. h. vorzugsweise nicht bestehend aus einer 3D-Stützstruktur, besteht und in den Aufnahmeraum eingesetzt wird, dazu eine Basis oder stabilisierende Stützfläche für die im Aufnahmeraum aufzunehmende Verbindungskomponente zu bilden. Auf diese Weise ist es auch bevorzugt möglich, in den Aufnahmeraum ein Wandelement als Basisstruktur ähnlich einem belastbaren Fundament eines Gebäudes einzubringen, um darauf bzw. sich dagegen abstützend die Verbindungskomponente im Aufnahmeraum anzuordnen. Denn wenn beispielsweise das 3D-Druck-Bauteil aus einem wenig belastbaren Kunststoff oder Metall besteht, lässt sich das in den Aufnahmeraum einzusetzende Wandelement aus einem stabilen Kunststoff beispielsweise in einem Spritzguss oder in einem verwandten Verfahren oder auch aus Metall erzeugen. Auf diese Weise tragen neben der inneren Verbindungskomponente, die beispielsweise aus Metall in einem 3D-Druck-Bauteil aus Kunststoff besteht, auch das innere Wandelement als Stützstruktur und vorzugsweise auch das äußere Wandelement als Begrenzungsstruktur zu einer stärker belastbaren Verbindungskomponente bei.

Vorzugsweise ist die Verbindungskomponente ein Gewindeeinsatz, der vorzugsweise einen ein Innengewinde des Gewindeeinsatzes verstärkenden Drahtgewindeeinsatz mit oder ohne Gewindehaltewindung (Screw-Lock) aufweist.

Gemäß einer weiteren bevorzugten Ausgestaltung vorliegender Erfindung ist ein bekannter oder in der Konstruktion ähnlicher Gewindeeinsatz innerhalb des 3D-Druck-Bauteils angeordnet, der sonst mittels Ultraschall- oder Warmeinbettverfahren in Kunststoffbauteile eingeformt wird. Ein derartiger Gewindeeinsatz ist beispielsweise in DE 10 2013 217 448 A1 beschrieben. In einer weiteren bevorzugten Ausgestaltung dieser Kombination aus Verbindungskomponente in Form des Gewindeeinsatz und des 3D-Druck-Bauteils weist das Innengewinde des Gewindeeinsatzes einen das Gewinde verstärkenden Drahtgewindeeinsatz bekannter Bauweise auf. Derartige Drahtgewindeeinsätze können unterschiedlich konstruiert sein und gehen beispielsweise aus DE 10 2010 050 735 A1 hervor.

In einer noch weiterführenden bevorzugten Ausgestaltung vorliegender Erfindung weist der das Gewinde verstärkende Drahtgewindeeinsatz eine oder eine Mehrzahl von sogenannten Screw-Lock-Windungen auf. Diese Windungen dienen dazu, einen im Gewindeeinsatz aufgenommenen Gewindebolzen verliersicher zu halten, selbst wenn die Gewindeverbindung zwischen dem Gewindebolzen und dem Gewindeeinsatz noch nicht abschließend fest gezogen worden ist. Eine derartige Screw-Lock-Windung ist im Vergleich zu den übrigen Windungen des Drahtgewindeeinsatzes bezogen auf seinen Innendurchmesser kleiner gewickelt, sodass ein eingeschraubte Gewindebolzen reibschlüssig in einer derartigen Windung gehalten wird. Diese Konstruktion ist in US 6,421,899 beschrieben, welche durch Bezugnahme hierin aufgenommen ist.

Ebenfalls bevorzugt ist das Wandelement des 3D-Druck-Bauteils ein Spritzgussteil, ein Metallteil oder ein 3D-Druck-Teil.

Gemäß unterschiedlicher bevorzugter Ausgestaltungen des 3D-Druck-Bauteils besteht das bevorzugte Wandelement zur Begrenzung des Aufnahmeraums sowie bevorzugt das Wandelement zum inneren Füllen und/oder Stabilisieren der Verbindungskomponente innerhalb des Aufnahmeraums aus Kunststoff oder aus Metall. Zudem ist es denkbar, ein derartiges Wandelement sowie das genannte Stützelement aus Keramik herzustellen, falls die zu erwartenden Belastungen der Verbindungskomponente und des 3D-Druck-Bauteils diese Materialwahl erforderlich machen. Des Weiteren ist es erfindungsgemäß bevorzugt, das Wandelement und/oder das abstützende innere Wandelement mittels Spritzguss oder 3D-Druck oder als ein aus Vollmaterial bestehendes Metallteil herzustellen.

Vorliegende Erfindung umfasst zudem ein Herstellungsverfahren eines 3D-Druck-Bauteils, insbesondere das oben beschriebene 3D-Druck-Bauteil, mit einer darin befestigten und von außerhalb des 3D-Druck-Bauteils verbindbaren Verbindungskomponente, welches die folgenden Schritte aufweist: a. 3D-Drucken eines ersten Teils des Bauteilkörpers mit einer umgebenden Begrenzungswand (Schritt 1), die einen Aufnahmeraum zumindest teilweise einschließt, wobei der erste Teil des Bauteilkörpers mit Schmelzschichtung, wie Fused Deposition Modeling (FDM) oder Fused Filament Fabrication (FFF), oder ARBURG Kunststoff-Freiformen (AKF) als einem bekannten additiven Verfahren aufgebaut wird, b. Anordnen der Verbindungskomponente in dem Aufnahmeraum (Schritt 2) während einer Unterbrechung des 3D-Druckens derart, dass die Verbindungskomponente formschlüssig und/oder reibschlüssig in dem Aufnahmeraum gehalten ist, c. Fortsetzen des 3D-Druckens (Schritt 4) nach dem Schritt 2, wobei die umgebende Begrenzungswand weiter aufgebaut wird, sodass die Begrenzungswand die Verbindungskomponente bis auf zumindest eine Zugangsöffnung zu der Verbindungskomponente umgibt.

Das oben beschriebene 3D-Druck-Bauteil wird gemäß unterschiedlicher bevorzugter Ausgestaltungen vorliegender Erfindung mit einem bekannten additiven Herstellungsverfahren produziert. Erfindungsgemäß sind als 3D-Druck-Verfahren die Schmelzschichtung, wie das Fused Deposition Modeling (FDM) oder die Fused Filament Fabrication (FFF) oder das Arburg Kunststoff-Freiformen (AKF). Die Durchführung der genannten Verfahren ist allgemein bekannt, sodass die Besonderheit des erfindungsgemäßen Herstellungsverfahrens aus der gezielten konstruktiven Gestaltung des 3D-Druck-Bauteils hervorgeht. Denn während des Herstellungsverfahrens ist zunächst darauf zu achten, dass in Abstimmung mit der aufzunehmenden Verbindungskomponente die innere Form des Aufnahmeraums vorzugsweise komplementär zu der aufzunehmende Verbindungskomponente ausgebildet ist. Während eine komplementäre Ausgestaltung der inneren Form des Aufnahmeraums in Bezug auf die aufzunehmenden Verbindungskomponente eine sehr enge Formabstimmung erfordert, ist es ebenfalls im Sinne der Erfindung, wenn der Aufnahmeraum eine unrunde Innenkontur aufweist, in welcher eine unrunde Außenkontur der Verbindungskomponente aufnehmbar ist. Basierend auf dieser abgestimmten Ausgestaltung von Aufnahmeraum und Verbindungskomponente ist die Verbindungskomponente drehfest im Aufnahmeraum aufnehmbar, wodurch vorzugsweise die Funktionalität der Verbindungskomponente, beispielsweise in Form eines Gewindeeinsatzes, unterstützt wird.

Nachdem der in seiner Form an die Verbindungskomponente angepasste Aufnahmeraum mithilfe des 3D-Druckverfahrens erzeugt worden ist, erfolgt zunächst eine Unterbrechung des 3D-Druckverfahrens. Im Rahmen der Unterbrechung wird vorzugsweise der Aufnahmeraum von nicht verfestigtem Material oder anderen Rückständen gereinigt, bevor die Verbindungskomponente in den Aufnahmeraum eingesetzt wird. Nach dem Einsetzen der Verbindungskomponente wird das Herstellungsverfahren des 3D Druck-Bauteils fortgesetzt. Dabei wird der Aufnahmeraum durch den weiteren Aufbau des 3D-Druck-Bauteils geschlossen, sodass vorzugsweise nur eine Verbindungsöffnung oder eine geschlossene Außenwand des 3D-Druck-Bauteils zurückbleibt.

Erfindungsgemäß ist als weiterer Schritt des Herstellungsverfahrens vorgesehen: d. Verschließen des Aufnahmeraums, in welchem die Verbindungskomponente angeordnet ist, mit einem separaten Wandelement (Schritt 3), sodass das Wandelement einen Teil der Begrenzungswand bildet, und e. 3D-Überdrucken des Wandelements nach dem Schritt 3 im Verlauf von Schritt 4.

Gemäß der oben beschriebenen erfindungsgemäßen Ausgestaltung des Herstellungsverfahrens wird der Aufnahmeraum nicht allein durch das 3D-Druckverfahren geschlossen. Vielmehr wird zum Begrenzen des Aufnahmeraums zunächst ein daran angepasstes Wandelement angrenzend an die Verbindungskomponente derart angeordnet, dass der Aufnahmeraum mithilfe eines gezielten Überdruckens des Wandelements geschlossen werden kann. Die gezielte Nutzung des Wandelements hat den Vorteil, dass die Außenwand des 3D-Druck-Bauteils platzsparend geschlossen werden kann, d. h. ohne beispielsweise einen domartigen Aufbau zum Verschließen des Aufnahmeraums zu verwenden. Zudem hat die Nutzung des genannten Wandelements den Vorteil, dass sich dieses zusätzlich stabilisierend auf die Struktur des 3D-Druck, Bauteils auswirkt. Denn gemäß anderer oben beschriebener bevorzugter Ausgestaltungen vorliegender Erfindung besteht dieses Wandelement aus Kunststoff und/oder Metall, welches nicht zwingend mit dem genutzten 3D-Druck-Verfahren hergestellt sein muss. Insofern ist es ebenfalls denkbar, ein Wandelement einzusetzen, welches mithilfe eines Spritzgussverfahrens oder eines Druckgussverfahrens hergestellt ist und sich somit aus einem Vollmaterial zusammensetzt.

Weiterhin bevorzugt wird in dem Herstellungsverfahren eine Innenkontur des Aufnahmeraums erzeugt, die nicht rotationssymmetrisch sowie zumindest teilweise an eine äußere Gestalt der angrenzenden Verbindungskomponente angepasst ist, um einen Formschluss zwischen der Verbindungskomponente und dem 3D-Druck-Bauteil im Aufnahmeraum herzustellen.

Des Weiteren weist das Wandelement bevorzugt eine unrunde Außenkontur auf, welches in eine unrunde Wandöffnung der Begrenzungswand eingesetzt wird. In weiterer bevorzugter Ausgestaltung vorliegender Erfindung ist das Wandelement formschlüssig mit der Verbindungskomponente verbunden und wird gemeinsam mit der Verbindungskomponente in den Aufnahmeraum eingesetzt oder das Wandelement wird während des Verschließens des Aufnahmeraums formschlüssig mit der Verbindungskomponente verbunden.

Gemäß unterschiedlicher bevorzugter Ausgestaltungen unterstützt ein Formschluss zwischen der im Aufnahmeraum aufgenommenen Verbindungskomponente und der umgebenden Innenwand des Aufnahmeraums sowie vorzugsweise ebenfalls zwischen dem Wandelement und einer dafür vorgesehenen Wandöffnung die Stabilität sowie die Belastbarkeit des 3D-Druck-Bauteils. Ein derart vorteilhafter Formschluss zwischen der Verbindungskomponente und der Innenkontur des Aufnahmeraums lässt sich bereits damit erzielen, wenn beide eine nicht rotationssymmetrische Form aufweisen, die sich bei einer relativen Drehung gegeneinander gegenseitig blockieren würde. Das Gleiche gilt im Hinblick auf die Abstimmung der äußeren Form des Wandelements und einer entsprechenden Wandöffnung, in welcher das Wandelement aufgenommen werden soll. Wenn das Wandelement bevorzugt zumindest teilweise im Aufnahmeraum aufgenommen wird, gilt es ebenfalls als vorteilhaft, wenn die aufnehmende Form des Aufnahmeraums entweder an das aufzunehmenden Wandelement angepasst ist und somit den Formschluss unterstützt oder wenn das Wandelement und der aufnehmenden Aufnahmeraum in diesem Bereich eine nicht rotationssymmetrische Gestalt aufweisen, die sich gegenseitig bei Verdrehen blockieren.

Zu einer weiteren Stabilisierung des 3D-Druck-Bauteils bei einer Belastung der aufgenommenen Verbindungskomponente ist es bevorzugt, das Wandelement ebenfalls formschlüssig mit der Verbindungskomponente zu verbinden. In einem erfindungsgemäß bevorzugten effektiven Herstellungsverfahren wird somit zunächst der Formschluss zwischen Verbindungskomponente und Bauteil im Aufnahmeraum durch die einzusetzende Verbindungskomponente hergestellt und nachfolgend das Wandelement formschlüssig mit Bauteil und Verbindungskomponente verbunden. Es ist in gleicher Weise denkbar, dass die Verbindungskomponente bereits mit dem Wandelement formschlüssig und vorzugsweise auch reibschlüssig oder stoffschlüssig verbunden ist. Auf diese Weise bilden beide eine gemeinsame Einheit, sodass mit dem Einsetzen der Verbindungskomponente in den Aufnahmeraum gleichzeitig das Wandelement passend im 3D-Druck-Bauteil platziert wird. Dieses gemeinsame Platzieren hat zur Folge, dass das Wandelement einen Teil des Freivolumens des Aufnahmeraums ausfüllt sodass es dann überdruckt werden kann, oder dass das Wandelement in einer dafür vorgesehenen Wandöffnung für eine passende Ausfüllung sorgt. Gemäß des erfindungsgemäßen Herstellungsverfahrens ist die Verbindungskomponente ein Gewindeeinsatz, eine Gewindebuchsen, ein Bajonettverschluss oder eine weibliche Rastkomponente. Nicht gemäß der Erfindung kann die Verbindungskomponente ein vorstehender Verbindungsbolzen oder ein Funktionsbolzen sein.

Erfindungsgemäß werden als Verbindungskomponente die oben genannten konstruktiven Ausgestaltungen, wie beispielsweise ein Gewindeeinsatz, ein Gewindebuchsen, ein Bajonettverschluss oder eine weibliche Rastkomponente verwendet. Nicht gemäß der Erfindung wird ein Verbindungsbolzen oder ein ähnlicher Funktionsbolzen verwendet. Daraus folgt, dass als Verbindungskomponente jegliche Konstruktion in das 3D-Druck-Bauteil integriert werden kann, welche mit einem dazu passenden Verbindungselement eine belastbare und funktionell sinnvolle Verbindung im konstruktiven Verbund eingehen kann.

Als 3D-Drucken wird Schmelzschichtung, wie Fused Deposition Modeling (FDM) oder Fused Filament Fabrication (FFF), oder ARBURG Kunststoff-Freiformen (AKF) verwendet.

Es hat sich im Vergleich zu anderen bekannten 3D-Druck-Verfahren bzw. zu anderen bekannten additiven Verfahren als vorteilhaft erwiesen, die Schmelzschichtung oder das Arburg Kunststoff-Freiformen zur Herstellung des bevorzugten 3D-Druck-Bauteils zu nutzen. Denn bei Einsatz dieser additiven Verfahren ist der Gestaltungsaufwand der inneren Struktur des 3D-Druck-Bauteils effektiv gering, um auch hohe Stückzahlen von 3D-Druck-Bauteil herstellen zu können. Des Weiteren hält sich gerade bei der Erzeugung des einen Hohlraum bildenden Aufnahmeraums der Reinigungsaufwand bei Unterbrechung des Herstellungsverfahrens relativ gering, sodass das Reinigen effektiv mit dem Einsetzen und Befestigen der Verbindungskomponente kombiniert werden kann.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine bevorzugte Ausgestaltung eines 3D-Druck-Bauteils in einer teilweisen seitlichen perspektivischen Schnittansicht mit einem formschlüssigen gehaltenen Gewindeeinsatz und einem überdruckten Wandelement,
- Figur 2: eine bevorzugte Explosionsdarstellung sowie unterschiedliche bevorzugte Aufbauwege des 3D-Druck-Bauteils,
- Figur 3: eine bevorzugte Ausführungsform eines 3D-Druck-Bauteils in einer seitlichen perspektivischen Schnittansicht mit einem formschlüssig gehaltenen Gewindeeinsatz, einem darin angeordneten Drahtgewindeeinsatz und einem überdruckten Wandelement,
- Figur 4: das Bauteil aus Figur 2 in einer seitlichen Schnittansicht,
- Figur 5: eine weitere bevorzugte Ausgestaltung eines 3D-Druck-Bauteils in einer teilweisen seitlichen perspektivischen Schnittansicht mit einem formschlüssigen gehaltenen Gewindeeinsatz und einem überdruckten Wandelement,
- Figur 6: eine bevorzugte Ausführungsform eines weiteren 3D-Druck-Bauteils in einer seitlichen perspektivischen Schnittansicht mit einem formschlüssig gehaltenen Gewindeeinsatz, einem darin angeordneten das Gewinde verstärkenden Drahtgewindeeinsatz und einem überdruckten Wandelement, wobei das Bauteil nur eine Öffnung zum Gewindeeinsatz aufweist,
- Figur 7: das Bauteil gemäß Figur 5 in einer seitlichen Schnittansicht.
- Figur 8: eine weitere bevorzugte Ausführungsform eines 3D-Druck-Bauteils in einer teilweisen seitlichen perspektivischen Schnittansicht mit einem formschlüssig gehaltenen Gewindeeinsatz, einem im Aufnahmeraum angeordneten stützenden Wand- oder Stützelement sowie einem zumindest teilweise überdruckten Wandelement,
- Figur 9: die bevorzugte Ausführungsform gemäß Figur 7 in einer seitlichen perspektivischen Schnittansicht,
- Figur 10: die bevorzugte Ausführungsform gemäß Figur 7 in einer seitlichen Schnittansicht sowie
- Figur 11: ein Flussdiagramm einer bevorzugten Ausführungsform des Herstellungsverfahrens für das 3D-Druck-Bauteil.

### 5. Detaillierte Beschreibung der bevorzugten Ausführungsformen

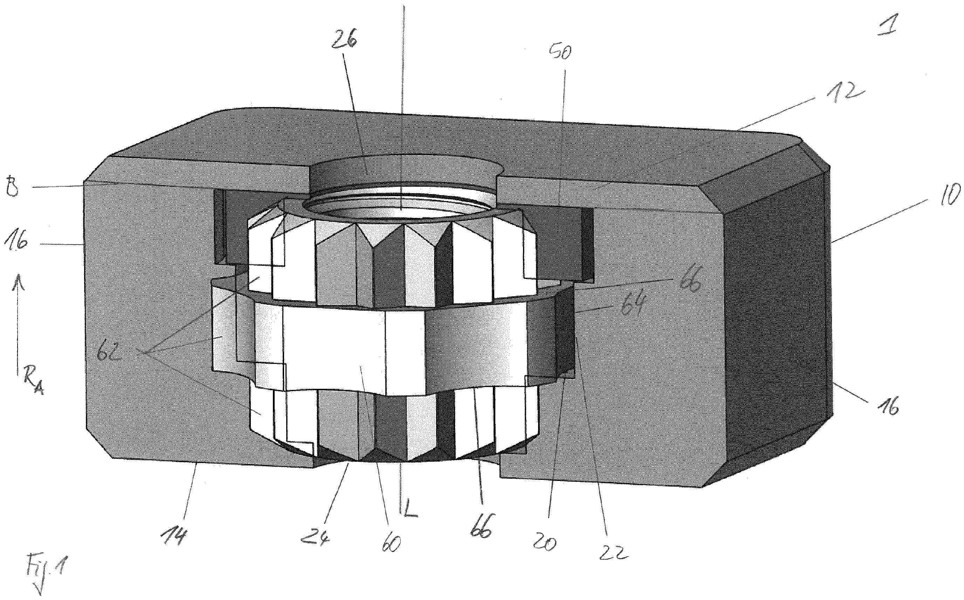

Figur 1 zeigt eine bevorzugte Ausführungsform des erfindungsgemäßen 3D-Druck-Bauteils 1, welches in der folgenden Beschreibung allgemein als Bauteil 1 bezeichnet wird. Das Bauteil 1 besteht aus einem Bauteilkörper 10, der mit einem additiven Verfahren bzw. mit einem 3D-Druck-Verfahren hergestellt ist. In Bezug auf den vorhergehenden Satz gilt, dass die allgemeinen Bezeichnungen additives Verfahren und 3D-Druck-Verfahren in diesem Zusammenhang gleichbedeutend verwendet werden.

Auch wenn dies in der schematischen Schnittansicht der Figur 1 aus Vereinfachungsgründen nicht dargestellt ist, besteht der Bauteilkörper 10 nicht aus einem Vollmaterial. Vielmehr bilden innere Stützstrukturen (nicht gezeigt) bekannter Konstruktion ein Gerüst für eine umgebende Begrenzungswand 12 des Bauteilkörpers 10. Je nach möglichen Belastungszuständen oder Stabilitätsanforderungen an die Begrenzungswand 12 ist deren Dicke vorzugsweise unterschiedlich ausgebildet.

Während grundsätzlich alle 3D-Druck-Verfahren für die Herstellung des Bauteils 1 gemäß folgender Beschreibung geeignet sind, nutzt vorliegende Erfindung die Schmelzschichtung, wie das Fused Deposition Modeling (FDM) oder die Fused Filament Fabrication (FFF) oder das Arburg Kunststoff-Freiformen (AKF). Neben diesen Verfahren ist es ebenfalls möglich, ein bekanntes Verfahren des selektiven Lasersinterns (SLS) oder des selektiven Laser Meltings (SLM) zur Verarbeitung von Kunststoffen oder Metallen einzusetzen. Auf die bevorzugten Schritte während der Herstellung des 3D-Druck-Bauteils 1 wird unten näher eingegangen.

Der Bauteilkörper 10 weist in seinem Inneren einen Aufnahmeraum 20 auf. Der Aufnahmeraums 20 ist an seiner Innenseite durch eine Innenwand 22 begrenzt. Der Verlauf der Innenwand 22 definiert eine bestimmte innere Form oder Innenkontur des Aufnahmeraums 20. Vorzugsweise hat die Innenkontur des Aufnahmeraums 20 eine unrunde Gestalt, um einen drehfesten Formschluss des Aufnahmeraums 20 mit einer darin angeordneten Verbindungskomponente 60 herzustellen.

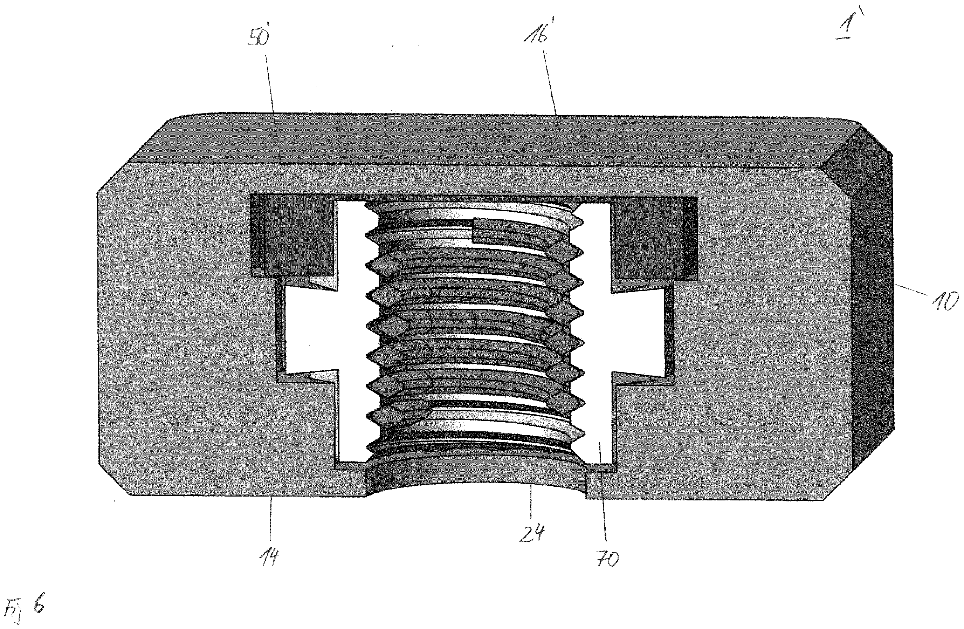

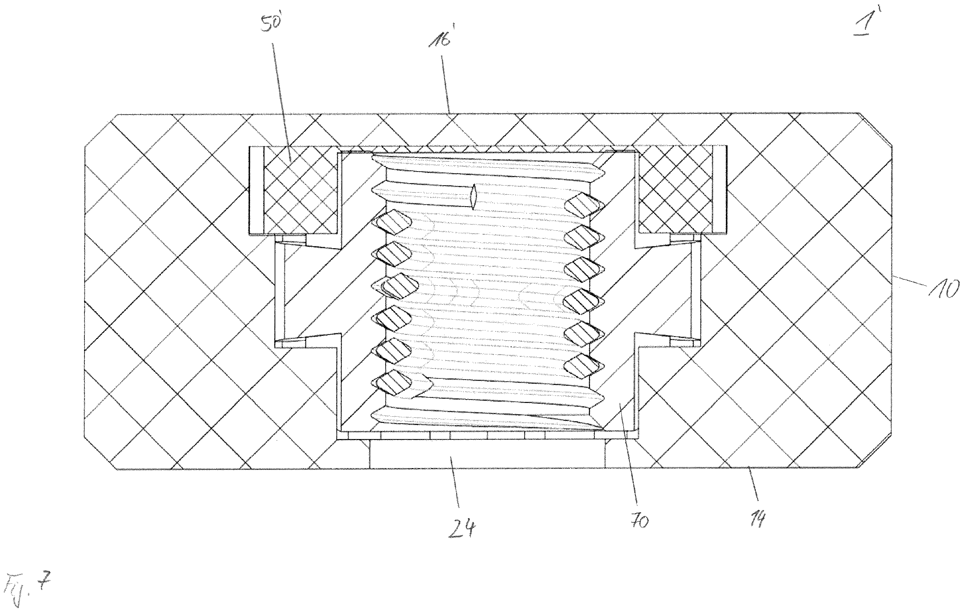

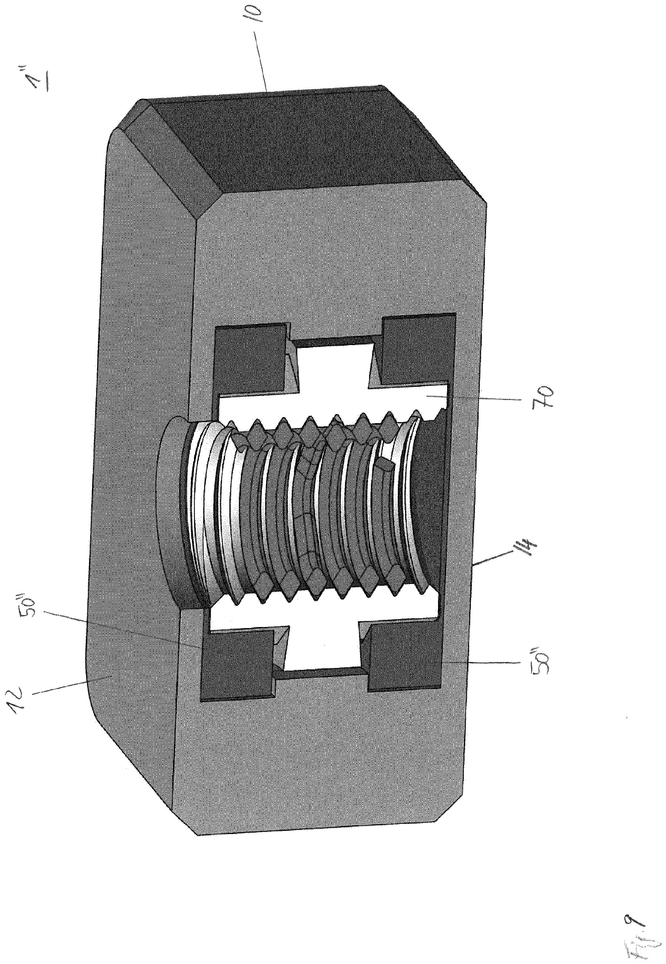

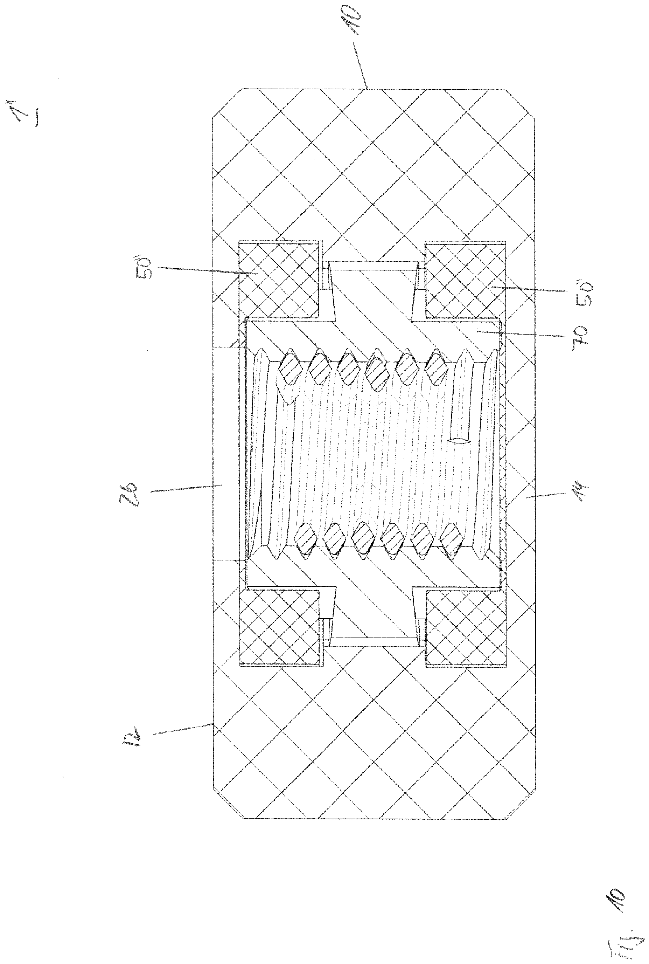

Der Aufnahmeraums 20 ist dafür vorgesehen, die Verbindungskomponente 60 derart fest aufzunehmen, dass sie mit einem außerhalb des Bauteils 1 angeordneten Verbindungselements (nicht gezeigt) verlässlich verbindbar ist. Die Verbindungskomponente 60 ist in den Figuren 1 bis 10 vorzugsweise ein Gewindeeinsatz. Derartige Gewindeeinsätze sind allgemein bekannt und werden beispielsweise mithilfe von Ultraschall- oder Warmeinbettverfahren in Kunststoffbauteilen befestigt. Es ist ebenfalls bekannt, derartige Gewindeeinsätze in Kunststoffbauteile während deren Herstellung einzugiessen.

Derartige Gewindeeinsätze 60 stellen ein Innengewinde bereit, indem beispielsweise ein Gewindebolzen eingeschraubt und befestigt werden kann.

Zudem ist es bevorzugt, als Verbindungskomponente 60 eine Gewindebuchse, eine weibliche Rastkomponente, einen aus dem Bauteil 1 ragenden Funktions- oder Gewindebolzen o. ä. zu nutzen. Entscheidend ist für jede Art von Verbindungskomponente 60, die zum Herstellen und Lösen einer Verbindung mit dem Verbindungselement durch ein Drehmoment belastet wird, dass die Verbindungskomponente 60 an dem im Aufnahmeraum 20 gehaltenen Bereich eine unrunde Außenkontur bezogen auf eine Drehung um die Längsachse der Verbindungskomponente 60 aufweist. Diese unrunde Außenkontur bildet die Grundlage für den Formschluss mit der ebenfalls bevorzugten unrunden Innenkontur des Aufnahmeraums 20.

Die bevorzugte unrunde Außenkontur der Verbindungskomponente 60 wird durch die umlaufend gezahnten Bereiche 62 gebildet. Zudem weist die Verbindungskomponente 60 zumindest einen radial vorstehenden Kragen 64 auf. Der Kragen 64 bildet in Richtung der Längsachse L der Verbindungskomponente 60 jeweils einen Hinterschnitt 66. Der Hinterschnitt 66 wirkt vorzugsweise stabilisierend gegen einen Auszug der Verbindungskomponente 60 aus dem Aufnahmeraum 20, wenn die Innenkontur des Aufnahmeraums 20 entsprechend, vorzugsweise komplementär dazu, angepasst ist oder zumindest eine oder eine Mehrzahl abstützender Stufen oder Stege aufweist.

Der Aufnahmeraum 20 ist in seiner Innenkontur an die äußere Form der Verbindungskomponente 60 soweit angepasst, dass der bevorzugte Formschluss für eine drehfeste Anordnung der Verbindungskomponente 60 im Aufnahmeraum 20 gewährleistet ist. So weist die Innenkontur des Aufnahmeraums 20 Vertiefungen auf, in die zumindest ein Teil der Zähne oder Vorsprünge der gezahnten Bereiche 62 eingreift. Zudem weist die Innenkontur des Aufnahmeraums 60 vorzugsweise in den Aufnahmeraum 20 ragende Vorsprünge auf, die in zumindest einen Teil der Vertiefungen der gezahnten Bereiche 62 eingreifen.

Bezugnehmend auf Figur 1 weist der Aufnahmeraum 20 eine erste Öffnung 24 auf. Diese ist in einer Grundseite 14 vorgesehen. Vorzugsweise wird der Bauteilkörper 10 beginnend an der Grundseite 14 mithilfe des additiven Verfahrens in Richtung der Längsachse L in Aufbaurichtung R_{A} schichtweise aufgebaut. Rechnergestützte Konstruktionsdaten geben dazu während des additiven Verfahrens vor, an welchen Positionen im Raum Material abzulagern bzw. auszuhärten ist, um den Bauteilkörper 10 schichtweise aufzubauen. Da das additive Verfahren an der Grundseite 14 den Aufbau des Bauteilkörpers 10 beginnt, wird im Bereich der ersten Öffnung 24 kein Material ausgehärtet. In den anderen Bereichen, die den Bauteilkörper 10 und den Aufnahmeraum 20 bilden, wird entsprechend der konstruktiven Datenvorgaben Material abgelagert und ausgehärtet.

Auf diese Weise wird der Bauteilkörper 10 bis ungefähr zur Begrenzungslinie B gefertigt, sodass lediglich die den Aufnahmeraum 20 abgrenzende Außenwand 16 fehlt. Entsprechend liegt der Bauteilkörper 10 mit dem Aufnahmeraum 20 vor, in den die Verbindungskomponente 60 über eine Einsetzöffnung 30 einsetzbar ist. In Figur 1 ist die Einsetzöffnung 30 nicht dargestellt, weil sie bereits mit mindestens einem Wandelement 50 und einem additiven Überdrucken zum Erzeugen der Außenwand 16 mindestens teilweise oder vollständig geschlossen worden ist.

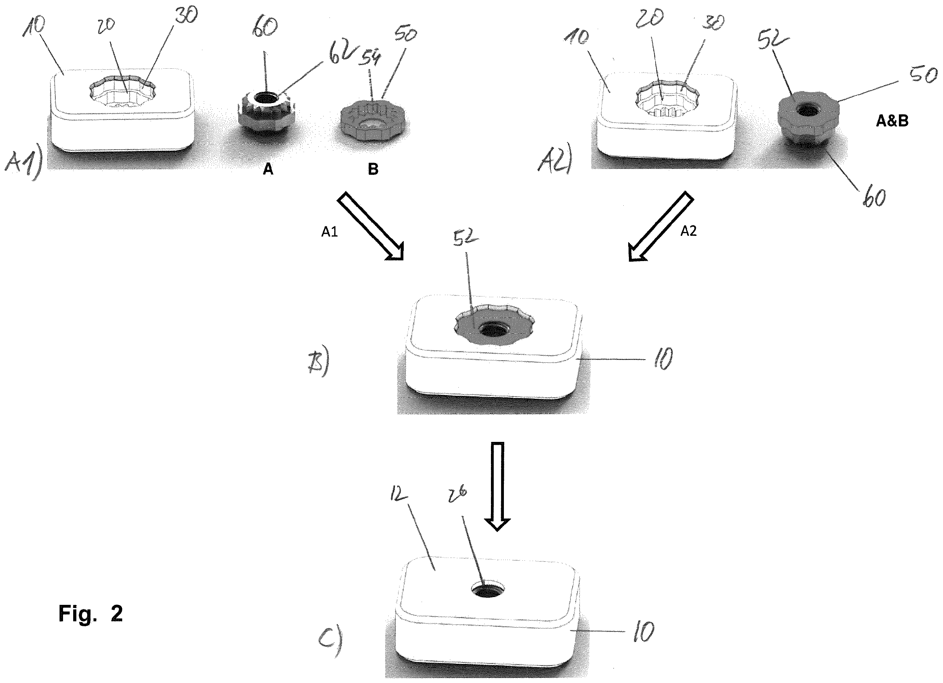

Dieser Vorgang und die daraus resultierende bevorzugte Konstruktion des Bauteils 1 lässt sich anhand von Figur 2 näher erläutern. Der mittels 3D-Druck erzeugte Bauteilkörper 10 liegt mit dem Aufnahmeraum 20 vor. Es ist erkennbar, dass die Innenkontur des Aufnahmeraums 20 unrund ausgebildet und zumindest teilweise an die äußere Form der Verbindungskomponente 60 angepasst ist. Vorzugsweise ist die Innenkontur des Aufnahmeraums 20 komplementär zur äußeren Form der Verbindungskomponente 60 ausgeformt bzw. additiv gedruckt.

Es ist ebenfalls bevorzugt, wenn die Innenkontur des Aufnahmeraums 20 zumindest teilweise an die Verbindungskomponente 60 angepasst ist, um diese aufzunehmen.

Zudem ist vorzugsweise der Aufnahmeraum 20 im Vergleich zu den Abmessungen der Verbindungskomponente 60 mit Untermaß vorgesehen. Auf dieser Grundlage wird die in den Aufnahmeraum 20 eingesetzte Verbindungskomponente 60 zusätzlich zum Formschluss durch den Reibschluss einer Presspassung gehalten.

Die Verbindungskomponente 60, die beispielgebend und gemäß einer bevorzugten Ausführungsform vorliegende Erfindung als Gewindeeinsatz gezeigt ist, wird durch die Einsetzöffnung 30 in den Aufnahmeraum 20 eingesetzt. Um eine vorhandene Öffnung in der Verbindungskomponente 60 durch das Überdrucken mittels 3D-Druck nicht zu blockieren oder zu beschädigen, wird das Wandelement 50 innerhalb des Aufnahmeraums 20 auf die Verbindungskomponente 60 aufgesetzt. Dadurch stellt das Wandelement 50 eine Stützkomponente dar, die vorzugsweise ein vorhandenes Leervolumen des Aufnahmeraums 20 auffüllt. Zudem ergänzt das Wandelement 50 dadurch bevorzugt die Begrenzungswand 12 des Bauteilkörpers 10 benachbart zur Einsetzöffnung 30. Weiterhin bevorzugt erzeugt das Wandelement 50 durch die überdeckende Anordnung auf der Verbindungskomponente 60 eine Fläche 52, die mittels 3D-Druck mit geringem Aufwand überdruckt werden kann, um den Aufnahmeraum 20 zu schließen.

Zur Illustration dieser Vorteile und des entsprechenden Vorgehens zeigt Figur 2 in der oberen linken Ecke (Abbildung A 1) den Bauteilkörper 10 mit Aufnahmeraum 20 und Einsetzöffnung 30. Daneben sind die Verbindungskomponente 60 sowie das Wandelement 50 gezeigt. Gemäß einer ersten Vorgehensweise A 1 wird die Verbindungskomponente 60 durch die Einsetzöffnung 30 im Aufnahmeraum 20 formschlüssig aufgenommen. Danach wird das Wandelement 50 im Aufnahmeraum 20 und angrenzend an die Verbindungskomponente 60 platziert. Dieser Zustand ist in Abbildung B) der Figur 2 gezeigt. Danach wird die äußere Begrenzungsfläche 54 des Wandelements 50 additiv überdruckt. Während des additiven Überdrucken wird vorzugsweise die zweite Öffnung 24 freigelassen, die einen Zugang zur Verbindungskomponente 60 ermöglicht (siehe Abbildung C) der Figur 2).

Bezugnehmend auf Figur 1 wurde somit vorzugsweise beginnend an der Begrenzungslinie B das Wandelement 50 und der übrige Bauteilkörper 10 mittels 3D-Druck überdruckt, um die äußere Begrenzungswand 12 über der Grundseite 14 zu erzeugen bzw. herzustellen.

Gemäß einer anderen bevorzugten Vorgehensweise (siehe Variante A2) in Figur 2) sind das Wandelement 50 und die Verbindungskomponente 60 miteinander verbunden und werden gemeinsam in den Aufnahmeraum 20 eingesetzt. Entsprechend resultiert der gemäß Abbildung B) dargestellte Zustand und das Herstellungsverfahren setzt sich gemäß obiger Beschreibung fort.

Gemäß einer weiteren bevorzugten Ausführungsform vorliegende Erfindung weist das Wandelement 50 eine Vertiefung 54 oder eine Öffnung auf, in die die Verbindungskomponente 60 formschlüssig eingreift. Diese bevorzugte Ausgestaltung ist in Figur 2 Abbildung A 2) zu erkennen. Denn ein außen gezahnter, vorzugsweise unrunder, Vorsprung 64 ist an die radiale Innenseite der abgesetzten Vertiefung 54 des Wandelements 50 angepasst und wird in diese eingesetzt. Auf diese Weise werden mechanische Belastungen der Verbindungskomponente 60, wie beispielsweise ein Drehmoment um die Längsachse L oder eine Auszugskraft aus dem Aufnahmeraum 20, durch das Wandelement 50 auf den angrenzenden Bauteilkörper 10 übertragen. Dadurch trägt das Wandelement 50 zusätzlich zur mechanisch belastbaren Anordnung der Verbindungskomponente 60 im Aufnahmeraum 20 bei. Zudem vermeidet das Wandelement 50 durch seine unterstützende Lastabtragung eine mechanische Überlastung der inneren Stützstruktur des Bauteilkörpers 10 durch mechanische Spannungen an den äußeren Rändern und Kanten der Verbindungskomponente 60.

Gemäß einer weiteren bevorzugten Ausführungsform vorliegende Erfindung ist das Wandelement 50 in seiner äußeren Form unrund ausgebildet und an eine ebenfalls unrunde Innenkontur des Aufnahmeraums 20 angepasst. Entsprechend wird auch durch diese Formanpassung ein zusätzlicher Formschluss und eine entsprechende Verankerung zwischen dem Wandelement 50 und dem Bauteilkörper 10 unterstützt.

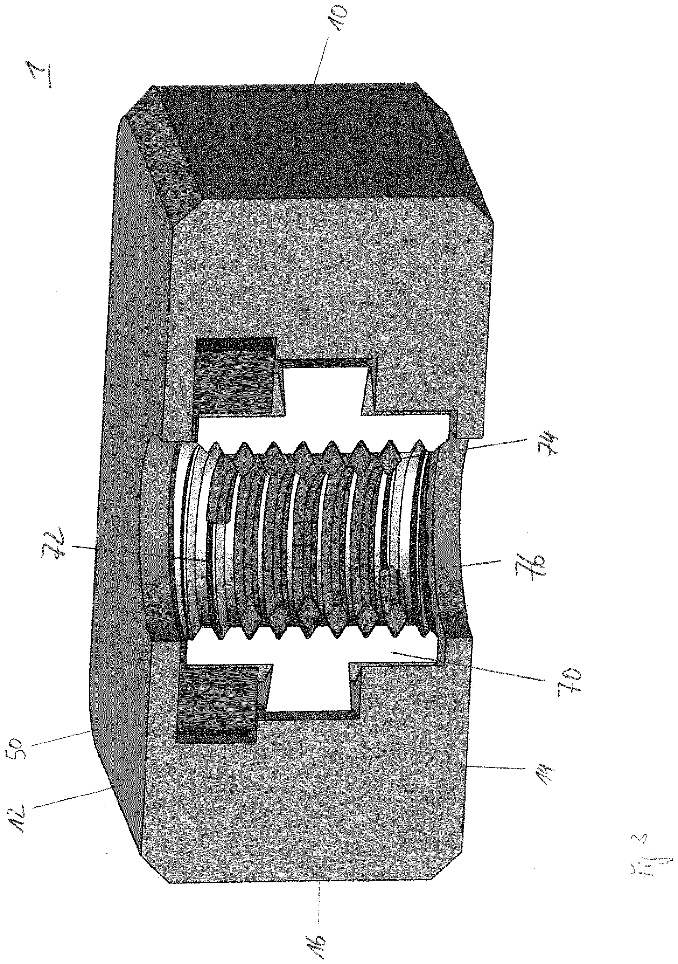

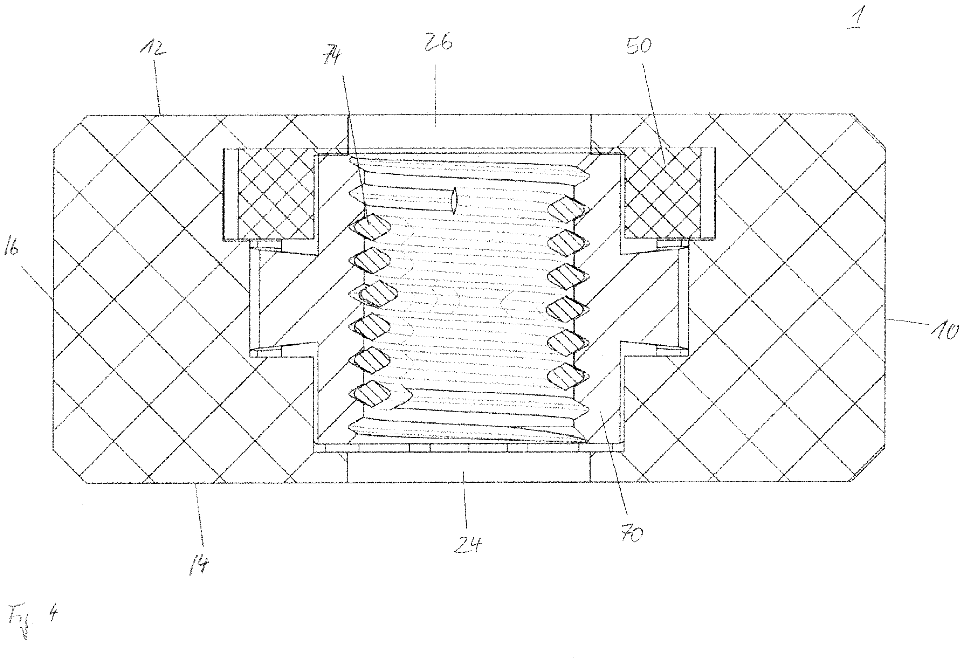

Die Figuren 3 und 4 zeigen weitere Schnittdarstellungen des Bauteils 1 mit Verbindungskomponente 60 und einem Wandelement 50 innerhalb des 3D-gedruckten Bauteilkörpers 10. Die Verbindungskomponente 60 ist vorzugsweise ein Gewindeeinsatz 70 mit einem Innengewinde 72. Das Innengewinde 72 ist weiterhin bevorzugt durch die Anordnung eines bekannten Drahtgewindeeinsatzes 74 verstärkt. Gemäß einer weiteren bevorzugten Ausgestaltung vorliegender Erfindung weist der Drahtgewindeeinsatz 74 mindestens eine Haltewindung 76 für einen Gewindeschaft auf. Die Haltewindung 76 hat einen geringeren Durchmesser als andere Windungen des Drahtgewindeeinsatzes 74, sodass ein Gewindeschaft nach dem Einschrauben in die Haltewindung darin reibschlüssig gehalten wird.

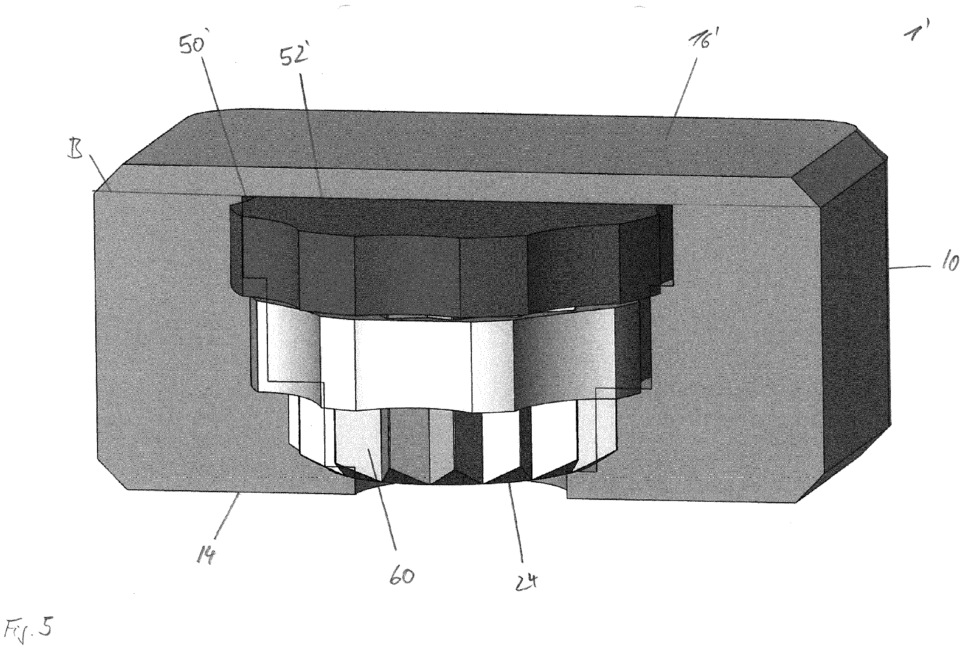

Eine weitere bevorzugte Ausführungsform des Bauteils 1 ist in den Figuren 5, 6 und 7 gezeigt. Im Unterschied zu der Ausführungsform der vorhergehenden Figuren ist nur die erste Öffnung 24 zum Aufnahmeraum 20 vorgesehen. Der Bauteilkörper 10 wird zusammen mit der ersten Öffnung 24 und dem Aufnahmeraum 20 im 3D-Druck erzeugt. Sofern der Bauteilkörper 10 während der Herstellung annähernd die Bauteilhöhe der Begrenzungslinie B erreicht hat, wird das additive Verfahren bzw. das 3D-Drucken unterbrochen.

Dann wird der Aufnahmeraum 20 von Rückständen der additiven Herstellung gereinigt. Dies gilt in gleicher Weise auch für das oben beschriebene Verfahren, selbst wenn es nicht extra erwähnt worden ist.

Nach der Reinigung des Aufnahmeraums 20 werden die Verbindungskomponente 60 und das Wandelement 50' gemäß einer der oben beschriebenen Formabstimmungen aufeinander im Aufnahmeraum 20 angeordnet.

Im Unterschied zum Wandelement 50 weist das Wandelement 50' eine durchgehende Überdruckfläche 52' auf. Während der Fortsetzung des 3D-Drucks wird vorzugsweise beginnend auf der Bauteilhöhe der Begrenzungslinie B der Bauteilkörper 10 fertig gedruckt und dabei die Fläche 52' des Wandelements 50' überdruckt. Damit wird die geschlossene Außenseite 16' gegenüber der Grundseite 14 gebildet.

Die Verbindungskomponente 60 ist vorzugsweise auf die gleiche Weise ausgestaltet, wie es in Bezug auf die Figuren 1 bis 4 erläutert worden ist.

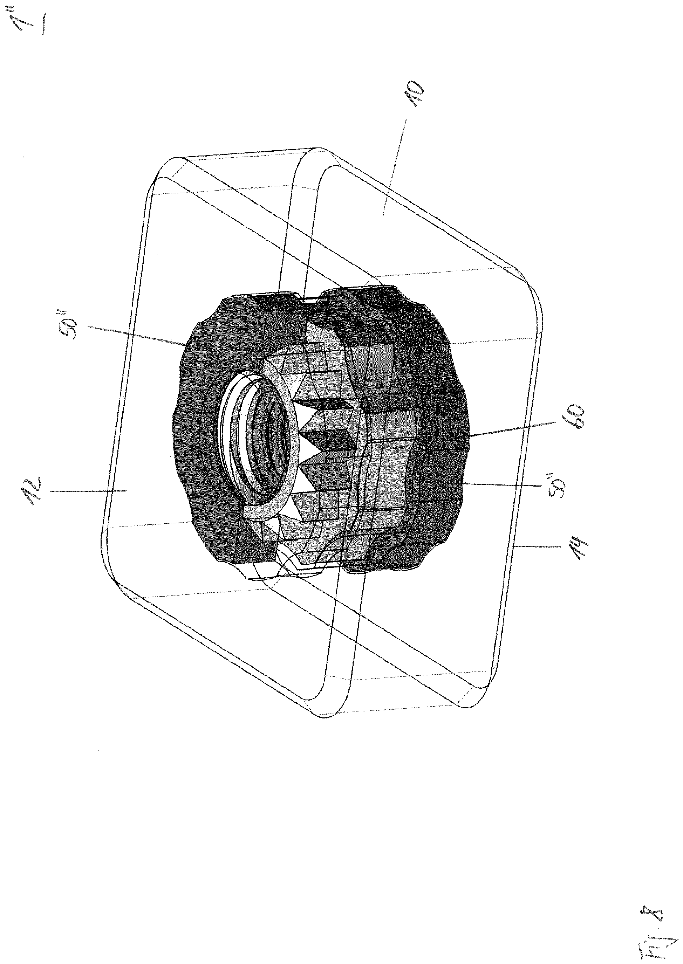

In den Figuren 8 bis 10 ist eine weitere bevorzugte Ausführungsform des Bauteils 1" gezeigt. Im Vergleich zur Ausführungsform der Figuren 1-4 weist das Bauteil 1" ein zweites Wandelement 50" auf, welches stützend und stabilisierend im Aufnahmeraum 20 angeordnet ist. Das zusätzliche Wandelement 50" ist in gleicher Weise wie in den oben' beschriebenen Ausführungsformen bevorzugt stabiler aufgebaut als der Bauteilkörper 10 mit innerer Stützstruktur. Somit für das Wandelement 50" zu einer Verstärkung der den Aufnahmeraum 20 begrenzenden Begrenzungswand, hier die Grundseite 14. Vorzugsweise ist das Wandelement 50, 50" ein Kunststoff- oder ein Metallteil und besteht aus Vollmaterial. Daher ist es vorzugsweise mechanisch belastbarer als der Bauteilkörper 10 aus dem 3D-Druck.

Zudem ist das Wandelement 50" vorzugsweise gemäß den oben beschriebenen Ausgestaltungsalternativen des bisher genutzten nur einen Wandelements 50 ausgestaltet. Entsprechend realisiert auch das zweite Wandelement 50" die gleichen strukturellen Stabilisierungsfunktionen wie das nur eine oben beschriebene Wandelement 50. Auf diese Weise wird die Verbindungskomponente 60, vorzugsweise der Gewindeeinsatz, zusätzlich stabilisiert und im Bauteilkörper 10 belastbar gehalten.

Das oben beschriebene Bauteil 1 wird mittels bekannter Additive Verfahren hergestellt. Erfindungsgemäß ist in diesem Zusammenhang die Schmelzschichtung, wie das Fused Deposition Modeling (FDM) und die Fused Filament Fabrication (FFF), und das Arburg Kunststoff-Freiformen (AKF).

Bei der Schmelzschichtung wird das Bauteil 1 schichtweise aus schmelzfähigem Kunststoff oder aus geschmolzenem Metall hergestellt. Zur Herstellung des Bauteils 1 wird auf einer Arbeitsfläche ähnlich wie bei einem normalen Tintenstrahldrucker ein Raster von Punkten aufgebracht. Die Punkte werden durch die Verflüssigung eines drahtförmigem Kunststoff- oder Wachsmaterials erzeugt. Dazu wird das ausgewählte Material erwärmt und über eine Düse extrudiert oder allgemein auf die Arbeitsfläche aufgebracht. Dort härtet das Material aufgrund seiner Abkühlung an der gewünschten Position aus.

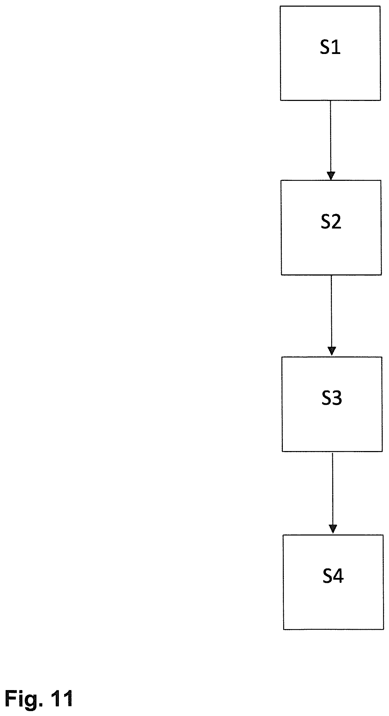

Die elektronisch vorgegebenen Konstruktionsdaten des Bauteils 1 legen fest, an welchen Stellen weiteres Material abgelagert und ausgehärtet wird. Auf diese Weise erfolgt das 3D-Drucken des ersten Teils des Bauteilkörpers 10 mit der umgebenden Begrenzungswand 14,16, indem wiederholt jeweils zeilenweise eine Arbeitsebene bzw. die oberste Bauteillage (nicht gezeigt) abgefahren und dann die Arbeitsebene stapelnd nach oben verschoben wird. Dadurch entsteht schichtweise der Bauteilkörper 10 vorzugsweise bis zur Begrenzungslinie B oder bis an den Rand der Einsetzöffnung 30 (siehe Figur 1; Schritt 1 in Figur 11).

Bei der schichtweisen Herstellung verbinden sich die einzelnen Schichten zu dem Bauteilkörper 10, selbst wenn dieser Vorgang nicht kontinuierlich erfolgt.

Für das FDM-Verfahren werden vorzugsweise Formwachse und Thermoplaste, wie Polyethylen, Polypropylen, Polylactid, ABS, PETG und thermoplastische Elastomere eingesetzt, um nur einige Beispiele zu nennen. In einer anderen Variante werden die Filamente mit Metallpulvern angereichert und das gedruckte Bauteil anschließend gesintert, um eine rein metallische Struktur zu erhalten. Bei dem des Weiteren bekannten FDM-3D-Drucken mit Metall werden beispielsweise in Wachs gefasste Metallpulverstäbe erhitzt und extrudiert und damit ein Grünkörper hergestellt. Nach dem Entfernen von möglichen Stützstrukturen wird der Grünkörper gesintert und dadurch verdichtet. Derartige Verfahren und Materialgestaltungen sind im Stand der Technik bekannt und in geeigneter Weise mit vorliegender Erfindung kombinierbar.

Eine weitere bevorzugte Ausführungsform des 3D-Drucks ist das bekannte Arburg Kunststoff-Freiformen. In diesem Verfahren werden vorzugsweise Standardgranulat aus Kunststoff verarbeitet. Die Kunststoffgranulate werden in einer plastifizierenden Schnecke aufgeschmolzen und nachfolgend über mindestens eine Düse als Kunststofftropfen abgegeben.

Über das Aushärten der Kunststofftropfen wird der Bauteilkörper 10 schichtweise aufgebaut. Dieses Verfahren muss nicht kontinuierlich ablaufen, sodass es vorzugsweise zum Säubern des ersten Teils des Bauteilkörpers 10 und/oder zum Platzieren der Verbindungskomponente 60 unterbrochen werden kann. Danach wird das 3D-Druckverfahren fortgesetzt.

Die oben genannten Verfahren sind bekannter Stand der Technik. Entsprechend sind diese Technologien in Kleinserien wie auch in größeren Produktionslinien erprobt und einsetzbar. Das gleiche gilt für das zur Verfügung stehende Materialspektrum.

Nachdem der Bauteilkörper 10 im Schritt 1 mit dem Aufnahmeraum 20 bis auf eine ungefähre Höhe der Begrenzungslinie B hergestellt worden ist, wird der laufende 3D-Druck unterbrochen. Somit liegt der Bauteilkörper 10 mit der ausreichend großen Einsetzöffnung 30 vor, wie es in Figur 2 veranschaulicht ist.

Anhand des Vergleichs der Figuren 2A 1) und 1 wird deutlich, dass der 3D-Druck des Bauteilkörpers 10 nicht zwingend auf Höhe der Begrenzungslinie B unterbrochen werden muss. Es kann auch bereits ein Teil der oberen Begrenzungswand 12 gemäß Figur 1 gedruckt werden, solange die ausreichend große Einsetzöffnung 30 erzeugt wird. Dies wurde in dem Bauteilkörper 10 von Figur 2A 1) und A 2) realisiert.

Basierend auf den den 3D-Druck steuernden konstruktiven Daten hat der Aufnahmeraum 20 die oben beschriebene Innenkontur zur verlässlichen Aufnahme und zum Halten der Verbindungskomponente 60. Daher wird nach Abschluss der ersten 3D-Druck-Phase die Verbindungskomponente 60 im Aufnahmeraum 20 eingesetzt (Schritt 2). Je nach Abstimmung der Innenkontur des Aufnahmeraums 20 und der äu-ßeren Form und Abmessungen der Verbindungskomponente 60 liegt danach eine formschlüssige und/oder reibschlüssige Verbindung zwischen dem Aufnahmeraum 20 und der Verbindungskomponente 60 vor.

Zudem ist es bevorzugt, mithilfe eines geeigneten Klebstoffs die Verbindungskomponente 60 im Aufnahmeraum 20 einzukleben. Dadurch wird ergänzend oder allein eine stoffschlüssige Verbindung zwischen der Innenkontur des Aufnahmeraums 20 und damit dem Bauteilkörper 10 und der Verbindungskomponente 60 hergestellt.

Um den Formschluss zwischen der Verbindungskomponente 60 und dem Bauteilkörper 10, also der Innenkontur des Aufnahmeraums 20, zu gewährleisten, weisen die Verbindungskomponente 60 und die Innenkontur des Aufnahmeraums 20 jeweils eine unrunde Form auf. Weiter bevorzugt wird die Innenkontur des Aufnahmeraums 20 während des 3D-Drucks komplementär zur äußeren Form der Verbindungskomponente 60 aufgebaut. Dies wird vorzugsweise genau passend realisiert, sodass die Verbindungskomponente 60 nur mit einem Spiel gemäß den Herstellungstoleranzen des 3D-Drucks nach dem Einsetzen im Aufnahmeraum 20 gehalten ist. Gemäß der anderen oben beschriebenen bevorzugten Ausgestaltung wird die Innenkontur des Aufnahmeraums 20 mit Untermaß im Vergleich zu den Abmessungen der aufzunehmenden Verbindungskomponente 60 gedruckt. Nach dem Einsetzen der Verbindungskomponente 60 wird diese reibschlüssig, also mit einer Presspassung, im Aufnahmeraum 20 gehalten.

Bevor der Aufnahmeraum 20 durch das Fortsetzen des 3D-Drucks und das Erzeugen der Begrenzungswand 12 geschlossen wird (Schritt 4), wird das Wandelement 50; 50'; 50" gemäß einer der oben beschriebenen bevorzugten Ausgestaltungen vorliegender Erfindung im Aufnahmeraum 20 eingesetzt (Schritt 3). Dazu wird das Wandelement 50 in einem Verbund mit der Verbindungskomponente 60 oder losgelöst von der Verbindungskomponente 60 einzeln eingesetzt. Dazu greift bevorzugt ein Teil der Verbindungskomponente 60 formschlüssig in die Vertiefung 54 oder Öffnung des Wandelements 50 ein oder ist bzw. wird in dieser reibschlüssig oder stoffschlüssig befestigt.

Nachdem das Wandelement 50 in der Einsetzöffnung 30 angeordnet worden ist, sei es im bevorzugten Formschluss mit der Innenseite der Einsetzöffnung 30 oder im Reibschluss oder in einer Kombination von beiden oder ohne Reibschluss oder Formschluss, bildet das Wandelement 50 einen Teil der Begrenzungswand 12. Auf diese Weise wird der Aufnahmeraum 20 durch das Wandelement 50 begrenzt und verschlossen (Schritt 3).

Nun wird im Schritt 4 der 3D Druck fortgesetzt, da durch das Wandelement 50 überdruckt und der Aufnahmeraum 20 mit dem Wandelement 50 und der Verbindungskomponente 60 geschlossen. Ein geschlossener Aufnahmeraum 20 bedeutet, dass die erste 24 und/oder die zweite Öffnung 26 im Bauteil 1 vorhanden ist/sind, die ein Verbinden eines Verbindungselements mit der Verbindungskomponente 60 gewährleistet/gewährleisten.

Es ist ebenfalls bevorzugt, die Verbindungskomponente 60 auch mit dem zweiten Wandelement 50 (siehe Figuren 8, 9, 10) zu stützen und im Aufnahmeraum 20 anzuordnen. Entsprechen würden bevorzugt vor dem Fortsetzen des 3D-Drucks im Schritt 4 die Verbindungskomponente 60 sowie die beiden Wandelemente 50 im Aufnahmeraum 20 angeordnet werden.

Nach Beenden des Überdruckens im Schritt 4 liegt das 3D-Druck-Bauteil 1 mit verlässlich und belastbar daran angeordneter und befestigter Verbindungskomponente 60 vor.

Gemäß unterschiedlicher bevorzugter Anwendungsmöglichkeiten bildet das 3D-Druck-Bauteil 1 einen Teil einer Fahrzeug- oder Flugzeugkonstruktion. Zudem ist es bevorzugt, mithilfe des 3D-Drucks Zubehörteile, Peripheriekomponenten in der Unterhaltungselektronik o. ä. Strukturbauteile mit der Verbindungskomponente 60 auszustatten. Dies verbessert die Kombinierbarkeit mit anderen Teilen.

Im Falle der Beschädigung oder des Versagens der Verbindungskomponente 60 ist es erforderlich, diese auszutauschen. Zu diesem Zweck wird die überdruckte Begrenzungswand 12 so weit entfernt, beispielsweise durch Fräsen, dass das angrenzende und dadurch freigelegte Wandelement 50 entferntbar ist. Danach ist ebenfalls die Verbindungskomponente 60 im Aufnahmeraum 20 entfernbar und eine neue Verbindungskomponente 60 gleicher oder anderer Bauart lässt sich im Aufnahmeraum 20 befestigen. Sollte es nötig sein, kann dazu die Innenkontur des Aufnahmeraums 20 mithilfe spannender Verfahren verändert oder die Verbindungskomponente 60 in den Aufnahmeraum 20 eingeklebt oder eingegossen werden. Das stabilisierende Wandelement 50, welches gemäß obiger bevorzugter Ausführungsform aus einem stabilen Kunststoff oder Metall besteht, wird zum erneuten Verschließen des Aufnahmeraums 20 eingesetzt und nachfolgend durch Laminieren verschlossen. Es ist ebenfalls bevorzugt, dass Wandelement 50 einzukleben und damit eine ausreichende Begrenzungswand 12 zu erzeugen.

### Bezugszeichenliste

- 1, 1', 1": 3D-Druck-Bauteil
- 10: Bauteilkörper
- 12: Begrenzungswand
- 14: Grundseite
- 16: Außenwand
- 20: Aufnahmeraum
- 22: Innenwand des Aufnahmeraums 20
- 24: erste Öffnung
- 26: zweite Öffnung
- 30: Einsetzöffnung
- 50: Wandelement
- 52: überdruckte Fläche des Wandelements
- 54: Vertiefung/Öffnung für die Verbindungskomponente
- 60: Verbindungskomponente
- 62: gezahnter Bereich
- 64: Kragen
- 66: Hinterschnitt
- 70: Gewindeeinsatz
- 72: Innengewinde
- 74: Drahtgewindeeinsatz
- 76: Haltewindung
- B: Begrenzungslinie
- L: Längsachse

## Patentansprüche

1. Ein 3D-Druck-Bauteil (1; 1'; 1") aus Kunststoff oder Metall, welches mit Hilfe von Schmelzschichtung, wie Fused Deposition Modeling "FDM" oder Fused Filament Fabrication "FFF", oder ARBURG Kunststoff-Freiformen "AKF", als ein bekanntes 3D-Druck-Verfahren hergestellt ist, und die folgenden Merkmale aufweist:
a. einen Bauteilkörper (10) mit einem Aufnahmeraum (20), der durch eine umgebende Begrenzungswand eingeschlossen ist und in welchem eine Verbindungskomponente (60) fest angeordnet ist, wobei die Verbindungskomponente (60) ein Gewindeeinsatz, eine Gewindebuchse, ein Bajonettverschluss oder eine weibliche Rastkomponente ist und durch mindestens eine Öffnung (14) der Begrenzungswand (12) mit einem Verbindungselement außerhalb des 3D-Druck-Bauteils (1; 1'; 1") verbindbar ist,
b. der Aufnahmeraum (20) weist eine 3D-gedruckte Innenkontur auf, die nicht rotationssymmetrisch zumindest teilweise angepasst an eine angrenzenden Seite der Verbindungskomponente (60) ausgebildet ist, so dass die Verbindungskomponente (60) formschlüssig im Aufnahmeraum (20) gehalten ist, und
c. die Begrenzungswand (12) des Aufnahmeraums (20) besteht zumindest an einer Seite aus einem separaten Wandelement (50; 50'; 50"), welches den Aufnahmeraum (20) direkt begrenzt, mittels 3D-Druck überdruckt und in die Begrenzungswand (12) integriert ist sowie innerhalb des Aufnahmeraums (20) auf die Verbindungskomponente (60) aufgesetzt ist, um eine vorhandene Öffnung in der Verbindungskomponente (60) durch das Überdrucken mittels 3D-Druck nicht zu blockieren oder zu beschädigen.

2. Das 3D-Druck-Bauteil (1; 1'; 1") gemäß Patentanspruch 1, in dem die Verbindungskomponente (60) einen Teilbereich aufweist, der in eine Öffnung oder eine dem Aufnahmeraum (20) zugewandte Vertiefung (54) des Wandelements (50; 50'; 50") ragt, so dass die Verbindungskomponente (60), vorzugsweise fest, mit dem Wandelement (50; 50'; 50") verbunden ist.

3. Das 3D-Druck-Bauteil (1; 1'; 1") gemäß Patentanspruch 2, wobei der Teilbereich der Verbindungskomponente (60) und das Wandelement (50; 50'; 50") zumindest gemäß einer der Alternativen formschlüssig, reibschlüssig und stoffschlüssig miteinander verbunden sind.

4. Das 3D-Druck-Bauteil (1; 1'; 1") gemäß einem der vorhergehenden Patentansprüche, in dem das Wandelement (50; 50'; 50") in einer unrunden Wandöffnung der Begrenzungswand (12) angeordnet und das Wandelement (50; 50'; 50") in einer Umfangsgestalt an die unrunde Wandöffnung angepasst ist, so dass ein Drehen des Wandelements (50; 50'; 50") in der Wandöffnung eingeschränkt oder verhindert ist.

5. Das 3D-Druck-Bauteil (1; 1'; 1") gemäß den Patentansprüchen 3 und 4, in dem die Verbindungskomponente (60), insbesondere ein Gewindeeinsatz, formschlüssig an der Begrenzungswand (12) und in dem Wandelement (50; 50'; 50") und das Wandelement (50; 50'; 50") formschlüssig in der Wandöffnung gehalten sind.

6. Das 3D-Druck-Bauteil (1; 1'; 1") gemäß einem der vorhergehenden Patentansprüche, in dem die Verbindungskomponente (60) ein Gewindeeinsatz (70) ist.

7. Das 3D-Druck-Bauteil (1; 1 '; 1") gemäß einem der vorhergehenden Patentansprüche, in dem das Wandelement (50; 50'; 50") ein Spritzgussteil, ein Metallteil oder ein 3D-Druck-Teil ist.

8. Ein Herstellungsverfahren eines 3D-Druck-Bauteils (1; 1'; 1"), insbesondere gemäß dem unabhängigen Patentanspruch 1, mit einer darin befestigten und von außerhalb des 3D-Druck-Bauteils (1; 1'; 1 ") verbindbaren Verbindungskomponente (60), wobei die Verbindungskomponente (60) ein Gewindeeinsatz (70), eine Gewindebuchse, ein Bajonettverschluss oder eine weibliche Rastkomponente ist und das Herstellungsverfahren die folgenden Schritte aufweist:
a. 3D-Drucken eines ersten Teils des Bauteilkörpers (10) mit einer umgebenden Begrenzungswand (12), Schritt 1 (S1), die einen Aufnahmeraum (20) zumindest teilweise einschließt, wobei der erste Teil des Bauteilkörpers (10) mit Schmelzschichtung, wie Fused Deposition Modeling "FDM" oder Fused Filament Fabrication "FFF", oder ARBURG Kunststoff-Freiformen "AKF", als einem bekannten additiven Verfahren aufgebaut wird,
b. Anordnen der Verbindungskomponente in dem Aufnahmeraum, Schritt 2 (S2), während einer Unterbrechung des 3D-Druckens derart, dass die Verbindungskomponente (60) formschlüssig und/oder reibschlüssig in dem Aufnahmeraum (20) gehalten ist,
c. Fortsetzen des 3D-Druckens, Schritt 4 (S4), nach dem Schritt 2, wobei die umgebende Begrenzungswand (12) weiter aufgebaut wird, sodass die Begrenzungswand (12) die Verbindungskomponente (60) bis auf zumindest eine Zugangsöffnung zu der Verbindungskomponente (60) umgibt, wobei das Herstellungsverfahren die weiteren Schritte aufweist:
d. Verschließen des Aufnahmeraums (20), in welchem die Verbindungskomponente (60) angeordnet ist, mit einem separaten Wandelement (50; 50'; 50"), Schritt 3 (S3), sodass das Wandelement (50; 50'; 50") einen Teil der Begrenzungswand (12) bildet, und
e. 3D-Überdrucken des Wandelements (50; 50'; 50") nach dem Schritt 3 im Verlauf von Schritt 4.

9. Das Herstellungsverfahren gemäß Patentanspruch 8, welches aufweist:
Erzeugen einer Innenkontur des Aufnahmeraums (20), die nicht rotationssymmetrisch sowie zumindest teilweise an eine äußere Gestalt der angrenzenden Verbindungskomponente (60) angepasst ist, um einen Formschluss zwischen der Verbindungskomponente (60) und dem 3D-Druck-Bauteil (1; 1'; 1") im Aufnahmeraum (20) herzustellen.

10. Das Herstellungsverfahren gemäß einem der vorhergehenden Patentansprüche 8 oder 9, wobei das Wandelement (50; 50'; 50") eine unrunde Außenkontur aufweist, welches in eine unrunde Wandöffnung der Begrenzungswand (12) eingesetzt wird.

11. Das Herstellungsverfahren gemäß Patentanspruch 10, in dem das Wandelement (50; 50'; 50") formschlüssig mit der Verbindungskomponente (60) verbunden und gemeinsam mit der Verbindungskomponente (60) in den Aufnahmeraum (20) eingesetzt wird oder
in dem das Wandelement (50; 50'; 50") während des Verschließens des Aufnahmeraums (20) formschlüssig mit der Verbindungskomponente (60) verbunden wird.

## Claims

1. A 3D print component (1; 1 '; 1") out of plastic or metal, which is produced with the help of layering by melting, such as Fused Deposition Modeling "FDM" or Fused Filament Fabrication "FFF", or ARBURG plastic free forming "AKF", as a known 3D printing method, and which comprises the following features:
a. a component body (10) with a receiving space (20), which is enclosed by a surrounding limiting wall and in which a connecting component (60) is firmly arranged, with the connecting component (60) being a thread insert, a thread bushing, a bayonet locking or a female latching component and is connectable through at least an opening (14) of the limiting wall (12) with a connecting element outside of the 3D print component (1; 1'; 1"),
b. the receiving space (20) comprises a 3D printed inner contour which is configured non-rotation symmetrically, at least partly adapted to an adjacent side of the connecting component (60) so that the connecting component (60) is retained in the receiving space (20) in a form-fit manner, and
c. on at least one side, the limiting wall (12) of the receiving space (20) consists of a separate wall element (50; 50'; 50") which directly delimits the receiving space (20), is overprinted by means of 3D print and integrated in the limiting wall (12) as well as attached on the connecting component within the receiving space (20) in order to not block or damage an existing opening in the connecting component (60) by the overprinting by means of 3D print.

2. The 3D print component (1; 1'; 1") according to claim 1, in which the connecting component (60) comprises a partial portion which projects into an opening or a recess (54), which faces the receiving space (20), of the wall element (50; 50'; 50"), so that the connecting component (60) is connected with the wall element (50; 50'; 50"), preferably firmly.

3. The 3D print component (1; 1'; 1") according to claim 2, with the partial portion of the connecting component (60) and the wall element (50; 50'; 50") being mutually connected by means of at least one of the alternatives form-fit, friction-fit or firmly bonded.

4. The 3D print component (1; 1'; 1") according to one of the preceding claims in which the wall element (50; 50'; 50") is arranged in a non-round wall opening of the limiting wall (12) and the wall element (50; 50'; 50") is adapted to the non-round wall opening in terms of its circumferential shape, so that a rotating of the wall element (50; 50'; 50") in the wall opening is delimited or avoided.

5. The 3D print component (1; 1'; 1 ") according to the claims 3 and 4, in which the connecting component (60), in particular a thread insert, is retained at the limiting wall (12) and in the wall element (50; 50'; 50") in a form fit manner and the wall element (50; 50'; 50") is retained in the wall opening in a form fit manner.

6. The 3D print component (1; 1'; 1") according to one of the preceding claims in which the connecting component (60) is a thread insert (70).

7. The 3D print component (1; 1'; 1") according to one of the preceding claims in which the wall element (50; 50'; 50") is an injection molding part, a metal part or a 3D print part.

8. A manufacturing method of a 3D print component (1; 1'; 1"), in particular according to the independent claim 1, with a connecting component (60) fastened in there and connectable from the outside of the 3D print component (1; 1'; 1"), with the connecting component (60) being a thread insert (70), a thread bushing, a bayonet lock or a female latching component and with the manufacturing method comprising the following steps:
a. 3D printing of a first part of the component body (10) with an encompassing limiting wall (12), step 1 (S1), which encloses a receiving space (20) at least partly, with the first part of the component body (10) being assembled by means of layering by melting, such as Fused Deposition Modeling "FDM" or Fused Filament Fabrication "FFF" or ARBURG plastic free forming "AKF", as a known additive method.
b. arranging the connecting component in the receiving space, step 2 (S2) during an interruption of the 3D printing such that the connecting component (60) is retained in the receiving space (20) form-fit and/or force-fit,
c. continuing the 3D printing, step 4 (S4), after step 2, wherein the encompassing limiting wall (12) is further assembled so that the limiting wall (12) encompasses the connecting component (60) up to at least an access opening to the connecting component (60), with the manufacturing method comprising the following steps:
d. closing the receiving space (20) in which the connecting component (60) is arranged, with a separate wall element (50; 50'; 50"), step 3 (S3), so that the wall element (50; 50', 50") forms a part of the limiting wall (12), and
e. 3D overprinting of the wall element (50; 50'; 50") after step 3 in the course of step 4.

9. The manufacturing method according to claim 8, which comprises:
generating an inner contour of the receiving space (20) which is adapted non-rotation symmetrically as well as at least partly to an outer shape of the adjacent connecting component (60) in order to provide a form fit between the connecting component (60) and the 3D print component (1; 1'; 1") in the receiving space (20).

10. The manufacturing method according to one of the preceding claims 8 or 9, with the wall element (50; 50'; 50") having a non-round outer contour which is inserted into a non-round wall opening of the limiting wall (12).

11. The manufacturing method according to claim 10, in which the wall element (50; 50'; 50") is connected form-fit with the connecting component (60) and is inserted jointly with the connecting component (60) into the receiving space (20) or
in which the wall element (50; 50'; 50") is connected form-fit with the connecting component (60) during closing of the receiving space (20).

## Revendications

1. Pièce imprimée en 3D (1 ; 1' ; 1") en plastique ou en métal, laquelle est fabriquée à l'aide d'un procédé de dépôt de matière fondue, tel que le procédé de Fused Deposition Modeling « FDM » ou de Fused Filament Fabrication « FFF », ou le procédé ARBURG de modelage de formes libres en plastique « APF », en tant que procédé d'impression 3D connu, et présente les caractéristiques suivantes :
a. un corps de pièce (10) doté d'un espace de réception (20), lequel est entouré par une paroi de limitation périphérique et dans lequel un composant de liaison (60) est disposé fixement, dans lequel le composant de liaison (60) est un insert fileté, une douille filetée, une fixation à baïonnette ou un composant d'encliquetage femelle et peut être relié à un élément de liaison à l'extérieur de la pièce imprimée en 3D (1 ; 1' ; 1") par au moins une ouverture (14) de la paroi de limitation (12),
b. l'espace de réception (20) présente un contour intérieur imprimé en 3D, lequel n'est pas conçu symétrique en rotation de façon au moins partiellement adaptée à un côté adjacent du composant de liaison (60), de sorte que le composant de liaison (60) est maintenu par complémentarité de forme dans l'espace de réception (20), et
c. la paroi de limitation (12) de l'espace de réception (20) est, au moins sur un côté, constituée d'un élément de paroi séparé (50 ; 50' ; 50") limitant directement l'espace de réception (20), surimprimé par impression 3D et intégré dans la paroi de limitation (12), tout en étant placé sur le composant de liaison (60) à l'intérieur de l'espace de réception (20), pour éviter de bloquer ou d'endommager une ouverture existante dans le composant de liaison (60) du fait de la surimpression par impression 3D.

2. Pièce imprimée en 3D (1 ; 1' ; 1") selon la revendication 1, dans laquelle le composant de liaison (60) présente une région partielle, laquelle s'engage dans une ouverture ou une cavité (54) de l'élément de paroi (50 ; 50' ; 50") tournée vers l'espace de réception (20), de sorte que le composant de liaison (60) est relié, de préférence fixement, à l'élément de paroi (50 ; 50' ; 50").

3. Pièce imprimée en 3D (1 ; 1' ; 1") selon la revendication 2, dans laquelle la région partielle du composant de liaison (60) et l'élément de paroi (50 ; 50' ; 50") sont reliés entre eux au moins selon l'une des alternatives parmi la complémentarité de forme, la friction ou la liaison de matière.

4. Pièce imprimée en 3D (1 ; 1' ; 1") selon l'une des revendications précédentes, dans laquelle l'élément de paroi (50 ; 50' ; 50") est disposé dans une ouverture de paroi non circulaire de la paroi de limitation (12) et l'élément de paroi (50 ; 50' ; 50") est adapté à l'ouverture de paroi non circulaire dans une configuration périphérique, de sorte qu'une rotation de l'élément de paroi (50 ; 50' ; 50") dans l'ouverture de paroi est restreinte ou empêchée.

5. Pièce imprimée en 3D (1 ; 1' ; 1") selon les revendications 3 et 4, dans laquelle le composant de liaison (60), en particulier un insert fileté, est maintenu par complémentarité de forme sur la paroi de limitation (12) et dans l'élément de paroi (50 ; 50' ; 50") et l'élément de paroi (50 ; 50' ; 50") est maintenu par complémentarité de forme dans l'ouverture de paroi.

6. Pièce imprimée en 3D (1 ; 1' ; 1") selon l'une des revendications précédentes, dans laquelle le composant de liaison (60) est un insert fileté (70).

7. Pièce imprimée en 3D (1 ; 1' ; 1") selon l'une des revendications précédentes, dans laquelle l'élément de paroi (50 ; 50' ; 50") est un article moulé par injection, un article métallique ou un article imprimé en 3D.

8. Procédé de fabrication d'une pièce imprimée en 3D (1 ; 1' ; 1"), en particulier selon la revendication indépendante 1, avec un composant de liaison (60) fixé dans celle-ci et apte à être relié depuis l'extérieur de la pièce imprimée en 3D (1 ; 1' ; 1"), dans lequel le composant de liaison (60) est un insert fileté (70), une douille filetée, une fixation à baïonnette ou un composant d'encliquetage femelle et le procédé de fabrication présente les étapes suivantes :
a. impression 3D d'une première partie du corps de pièce (10) avec une paroi de limitation périphérique (12), étape 1 (S1), laquelle entoure au moins partiellement un espace de réception (20), dans lequel la première partie du corps de pièce (10) est développée à l'aide d'un procédé de dépôt de matière fondue, tel que le procédé de Fused Deposition Modeling « FDM » ou de Fused Filament Fabrication « FFF », ou le procédé ARBURG de modelage de formes libres en plastique « APF », en tant que procédé additif connu,
b. agencement du composant de liaison dans l'espace de réception, étape 2 (S2), pendant une interruption de l'impression 3D, de telle façon que le composant de liaison (60) est maintenu par complémentarité de forme et/ou par friction dans l'espace de réception (20),
c. poursuite de l'impression 3D, étape 4 (S4), après l'étape 2, dans lequel la paroi de limitation périphérique (12) est davantage développée, de telle façon que la paroi de limitation (12) entoure le composant de liaison (60) à l'exception d'au moins une ouverture d'accès au composant de liaison (60), le procédé de fabrication présentant les étapes supplémentaires suivantes :
d. fermeture de l'espace de réception (20), dans lequel est agencé le composant de liaison (60), avec un élément de paroi séparé (50 ; 50' ; 50"), étape 3 (S3), de telle façon que l'élément de paroi (50 ; 50' ; 50") forme une partie de la paroi de limitation (12), et
e. surimpression 3D de l'élément de paroi (50 ; 50' ; 50") après l'étape 3 au cours de l'étape 4.

9. Procédé de fabrication selon la revendication 8, présentant :
création d'un contour intérieur de l'espace de réception (20), lequel n'est pas conçu symétrique en rotation et de façon au moins partiellement adaptée à une configuration extérieure du composant de liaison (60) adjacent, de manière à réaliser une complémentarité de forme entre le composant de liaison (60) et la pièce imprimée en 3D (1 ; 1' ; 1") dans l'espace de réception (20).

10. Procédé de fabrication selon l'une des revendications 8 ou 9, dans lequel l'élément de paroi (50 ; 50' ; 50") présente un contour extérieur non circulaire, lequel est inséré dans une ouverture de paroi non circulaire de la paroi de limitation (12).

11. Procédé de fabrication selon la revendication 10, dans lequel l'élément de paroi (50 ; 50' ; 50") est relié par complémentarité de forme au composant de liaison (60) et inséré ensemble avec le composant de liaison (60) dans l'espace de réception (20) ou
dans lequel l'élément de paroi (50 ; 50' ; 50") est relié par complémentarité de forme au composant de liaison (60) pendant la fermeture de l'espace de réception (20).
